# EUROPEAN PATENT SPECIFICATION

(11) **EP 4 589 685 B1**
(45) Date of publication and mention of the grant of the patent: **11.11.2026**
(21) Application number: 24223723.8
(22) Date of filing: 30.12.2024
(51) Int. Cl.: H01M 4/36, H01M 4/133, H01M 4/38, H01M 4/40, H01M 4/587

(54) **ANODE-SOLID ELECTROLYTE SUBASSEMBLY FOR ALL-SOLID SECONDARY BATTERY, AND ALL-SOLID SECONDARY BATTERY INCLUDING THE SAME**
ANODEN-FESTELEKTROLYT-UNTERBAUGRUPPE FÜR EINE FESTKÖRPERSEKUNDÄRBATTERIE UND FESTKÖRPERSEKUNDÄRBATTERIE DAMIT
SOUS-ENSEMBLE ANODE-ÉLECTROLYTE SOLIDE POUR BATTERIE SECONDAIRE TOUT SOLIDE, ET BATTERIE SECONDAIRE TOUT SOLIDE LE COMPRENANT

(30) Priority: 05.01.2024 KR 20240002441; 27.12.2024 KR 20240197881
(43) Date of publication of application: 23.07.2025
(73) Proprietor: SAMSUNG SDI CO., LTD., Yongin-si, Gyeonggi-do 17084 (KR)
(72) Inventor: KU, Junhwan, 16678 Suwon-si (KR); YOON, Kyungho, 16678 Suwon-si (KR); CHOI, Bokkyu, 16678 Suwon-si (KR); KANG, Dongil, 16678 Suwon-si (KR); LEE, Yonggun, 16678 Suwon-si (KR)
(74) Representative: Elkington and Fife LLP

(56) References cited:
- EP-A1- 4 432 413
- WO-A1-2023/112405
- CN-A- 113 346 124
- CN-B- 109 904 462
- JP-A- 2021 132 033
- US-A1- 20240 038 965
- US-B2- 11 114 656

## Description

### FIELD OF THE INVENTION

The disclosure relates to an anode-solid electrolyte subassembly for an all-solid secondary battery, and an all-solid secondary battery including the anode-solid electrolyte subassembly.

### BACKGROUND OF THE INVENTION

In line with recent requirements in industry, batteries with high energy density and stability are actively being developed. For example, lithium-ion batteries may be used in industries related to information devices, communication devices, automobiles, and the like. In the automobile industry, safety is particularly emphasized as it directly affects human lives.

Currently commercially-available lithium-ion batteries utilize liquid electrolytes containing flammable organic solvents, and therefore in the event of a short-circuit, are likely to overheat and catch fire. In this context, all-solid secondary batteries, which employ solid electrolytes instead of liquid electrolytes, have been proposed.

An all-solid secondary battery, by not using flammable organic solvents, may significantly reduce the risk of fire or explosion even in the event of a short-circuit. Accordingly, such an all-solid secondary battery may provide significantly high safety compared to lithium-ion batteries using liquid electrolytes. CN 113 346 124 A discloses an all-solid secondary battery.

### SUMMARY OF THE INVENTION

Provided is a novel anode-solid electrolyte subassembly for an all-solid secondary battery.

Provided is an all-solid secondary battery, which has improved cell performance by including the anode-solid electrolyte subassembly.

Additional aspects will be set forth in part in the description which follows and, in part, will be apparent from the description, or may be learned by practice of the presented embodiments of the present disclosure.

According to an aspect of the disclosure, an anode-solid electrolyte subassembly for an all-solid secondary battery includes:
an anode current collector; an anode active material layer disposed on the anode current collector; and a solid electrolyte disposed on the anode active material layer and opposing the anode current collector,
wherein the anode active material layer includes a first anode active material layer disposed in contact with the solid electrolyte, and a second anode active material layer disposed in contact with the anode current collector,
wherein the first anode active material layer includes a first anode active material containing: a mixture of i) a first carbon anode active material and ii) one or more first elements selected from metals and metalloids; a composite of i) the first carbon anode active material and ii) the one or more first elements selected from metals and metalloids; or a combination thereof,
wherein the second anode active material layer includes a second anode active material containing: a mixture of i) a second carbon anode active material and ii) one or more second elements selected from metals and metalloids; a composite of i) the second carbon anode active material and ii) the one or more second elements selected from metals and metalloids; or a combination thereof, and
wherein an amount of the first elements in the first anode active material layer is more than an amount of the second elements in the second anode active material layer, and the amount of the first elements is about 25 wt% to about 80 wt% with respect to a total weight of the first anode active material.

The total amount of the first and second elements in the anode active material layer may be about 15 wt% to about 40 wt% with respect to the total weight of the anode active material layer. The thickness of each of the first anode active material layer and the second anode active material layer may be about 1 µm to about 10 µm.

The first and second anode active materials may each independently include a mixture of first particles and second particles, the first particles composed of amorphous carbon and the second particles composed of a metal or a metalloid, wherein an amount of the second particles with respect to a total weight of the mixture may be about 1 wt% to about 60 wt%.

According to another aspect of the disclosure, an all-solid secondary battery includes a cathode; and the anode-solid electrolyte subassembly disposed on the cathode, wherein a solid electrolyte of the anode-solid electrolyte subassembly is disposed between the cathode and the anode active material layer.

The solid electrolyte of the anode-solid electrolyte subassembly can comprise a sulfide solid electrolyte. The sulfide solid electrolyte may include an argyrodite-type solid electrolyte, the argyrodite-type solid electrolyte may include one or more selected from Li₆PS₅Cl, Li₆PS₅Br, and Li₆PS₅I, and the argyrodite-type solid electrolyte may have a density of about 1.5 g/cc to about 2.0 g/cc.

The first anode active material may include a mixture of first particles composed of amorphous carbon and second particles composed of a metal or a metalloid, wherein an amount of the second particles with respect to a total weight of the mixture may be about 1 wt% to about 60 wt%.

The anode current collector, the first anode active material layer, and the area therebetween may be a lithium (Li) metal-free region that does not contain Li metal while the all-solid secondary battery is in the initial state or a state after discharging.

### BRIEF DESCRIPTION OF THE DRAWINGS

The above and other aspects, features, and advantages of certain embodiments of the present disclosure will be more apparent from the following description taken in conjunction with the accompanying drawings, in which:
FIGS. 1A and 1B schematically show the structures of an anode for an embodiment of an all-solid secondary battery, after charging and after discharging, respectively;
FIGS. 2A and 2B schematically show the structures of an anode for an all-solid secondary battery, after charging and discharging, respectively, for comparison with FIGS. 1A and 1B;
FIG. 3A shows the changes in discharge capacity (milliampere-hours per gram, mAh/g) of the all-solid secondary batteries of Examples 1 and 2 and Comparative Examples 1 to 6, during high-temperature (45 °C) and 1 C discharging;
FIG. 3B shows the changes in discharge capacity (milliampere-hours per gram, mAh/g) of the all-solid secondary batteries of Examples 1 and 2 and Comparative Examples 1 to 6, during high-temperature (45 °C) and 2 C discharging;
FIG. 3C shows the changes in average voltage (Volt, V) of the all-solid secondary batteries of Examples 1 and 2 and Comparative Examples 1 to 6, during high-temperature (45 °C) and 1 C discharging;
FIG. 3D shows the changes in average voltage (Volt, V) of the all-solid secondary batteries of Examples 1 and 2 and Comparative Examples 1 to 6, during high-temperature (45 °C) and 2 C discharging;
FIG. 4A shows the changes in discharge capacity (milliampere-hours per gram, mAh/g) of the all-solid secondary batteries of Examples 1 and 2 and Comparative Examples 1 to 6, during low-temperature (0 °C) and 0.1 C discharging;
FIG. 4B shows the results of evaluation of voltage characteristics (V vs. Li/Li⁺) of the all-solid secondary batteries of Example 2 and Comparative Example 2, when increasing charge speeds to 0.1 C, 0.2 C, and 0.33 C, while the discharge speed is fixed at 0.1 C;
FIG. 4C is a graph showing changes in voltage characteristics (V vs. Li/Li⁺) of all-solid secondary batteries of Example 3 and Comparative Example 2 when increasing charging speeds to 0.1 C and 0.2 C while the discharge speed is fixed at 0.1 C;
FIG. 5 is a schematic diagram of an embodiment of a structure of an all-solid secondary battery;
FIG. 6 is a schematic diagram of another embodiment of a structure of an all-solid secondary battery; and
FIG. 7 is a schematic diagram of another embodiment of a structure of an all-solid secondary battery.

### DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

The present inventive concept, which will be more fully described hereinafter, may have various variations and various embodiments, and specific embodiments will be illustrated in the accompanying drawings and described in greater detail. However, the present inventive concept should not be construed as being limited to specific embodiments set forth herein. Rather, these embodiments are to be understood as encompassing all variations, equivalents, or alternatives included in the scope of the present inventive concept.

Unless explicitly stated otherwise in the present specification, when an element, such as a layer, a film, an area, and a plate, is referred to as being "on" or "over" another element, it can be directly on the other element or intervening elements may also be present.

Unless explicitly stated otherwise in the present specification, any terms expressed in the singular form may also include the plural form. Further, unless explicitly stated otherwise, "including A or B" may mean "including A, including B, or including A and B".

The term "a combination thereof" as used herein may mean a mixture, a laminate, a composite, a copolymer, an alloy, a reaction product, or the like, of referents.

Unless otherwise defined herein, a particle diameter may be an average particle diameter. In addition, the particle diameter may mean an average particle diameter (D50) referring to a diameter of particles at cumulative 50 vol% in a particle size distribution. The average particle size (D50) may be measured by methods widely known to those skilled in the art. For example, the average particle size (D50) may be measured by a particle size analyzer, or may be measured by using a transmission electron microscopy image, or a scanning electron microscopy image. Alternatively, such measurements may be taken by a measurement device using a dynamic light-scattering technique, and the number of particles within a given particle size range may be counted through data analyses, and an average particle diameter (D50) value may be calculated therefrom. Alternatively, the average particle diameter (D50) may be measured using a laser diffraction method. If the laser diffraction method is to be used for the measurement, for example, the particles to be measured may be dispersed in a dispersion medium and subjected to ultrasonic radiation at about 28 kHz and a power output of 60 Watts, and based on 50 % in the particle size distribution according to the measurement device, the average particle diameter (D50) may be calculated.

The terminology used hereinbelow is used for the purpose of describing particular embodiments only, and is not intended to limit the present inventive concept. As used herein, the singular forms are intended to include the plural forms as well, unless the context clearly indicates otherwise. As used herein, the terms "comprises" and/or "comprising," or "includes" and/or "including" specify the presence of stated features, regions, integers, steps, operations, elements, components, ingredients, materials, or combinations thereof, but do not preclude the presence or addition of one or more other features, regions, integers, steps, operations, elements, components, ingredients, materials, or combinations thereof. As used herein, "/" may be interpreted as "and", or as "or" depending on the context.

In the drawings, the thicknesses of layers and regions may be exaggerated for clarity of description. Like reference numerals denote like elements throughout the specification. Throughout the specification, when a component, such as a layer, a film, a region, or a plate, is described as being "above" or "on" another component, the component may be directly above the other component, or there may be yet another component therebetween. It will be understood that although the terms "first," "second," etc. may be used herein to describe various elements, these elements should not be limited by these terms. These terms are only used to distinguish one element from another element.

Spatially relative terms, such as "top," "bottom," "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the term "below" can encompass both an orientation of above and below. The device may be otherwise oriented (rotated 90 degrees or at other orientations) and the spatially relative descriptors used herein interpreted accordingly.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 15%, 10% or 5% of the stated value.

The term "metal" as used herein refers to both metals and metalloids such as silicon and germanium, in an elemental or ionic state.

The term "alloy" as used herein refers to a mixture of two or more metals.

As used herein, the term "cathode active material" refers to a cathode material capable of undergoing lithiation and delithiation, and the term "anode active material" refers to an anode material capable of undergoing lithiation and delithiation.

As used herein, the terms "lithiation" and "to lithiate" refer to a process of adding lithium to a cathode active material or an anode active material, and the terms "delithiation" and "to delithiate" refer to a process of removing lithium from a cathode active material or an anode active material.

As used herein, the terms "charging" and "to charge" refer to a process of providing electrochemical energy to a battery, and the terms "discharging" and "to discharge" refer to a process of removing electrochemical energy from a battery.

As used herein, the terms "positive electrode" and "cathode" refer to an electrode at which electrochemical reduction and lithiation take place during a discharging process, and the terms "negative electrode" and "anode" refer to an electrode at which electrochemical oxidation and delithiation take place during a discharging process.

The term "particle diameter" of particles, as used herein, refers to an average diameter if the particles are spherical, and refers to an average major axis length if the particles are non-spherical. The particle diameter of particles may be measured using a particle size analyzer (PSA). The term "particle diameter" of particles, as used herein, refers to, for example, an average particle diameter. The average particle diameter, unless otherwise expressly indicated, refers to a median particle diameter (D50). Median particle diameter (D50) refers to the size of particles corresponding to a cumulative value of 50 % as counted from the smallest particle size on a particle size distribution curve in which particles in the sample are accumulated from the smallest particle size to the largest particle size. The cumulative value may be, for example, a cumulative volume. The median particle diameter (D50) may be measured, for example, by a laser diffraction method.

The size of particles, if measured using a scanning electron microscope, may be determined as the average value of particle diameters of 30 or more randomly selected particles of 1 µm or more, excluding fine particles.

The average particle diameter of the cathode active material may be measured using a laser diffraction method. More specifically, the cathode active material may be dispersed in a solution and introduced into a commercial laser diffraction particle size measurement device (e.g., Microtrac MT 3000) to undergo ultrasonic radiation at about 28 kHz and a power output of 60 Watts, and the average particle diameter (D50) may be calculated based on 50 % in the particle size distribution according to the measurement device.

The term "D10" as used herein may refer to a diameter of particles corresponding to a cumulative 10 vol% in a particle size distribution, and the term "D90" as used herein may refer to a diameter of particles corresponding to a cumulative 90 vol% in a particle size distribution.

In the present specification, "a composite of a carbon anode active material and one or more elements selected from metals and metalloids" refers to a material where the carbon anode active material and the one or more elements selected from metals and metalloids are complexated, and conceptually, refers to a material where two or more materials are complexated, and which exhibits improved performance compared to when using each constitutive material alone, while each material physically and chemically retains its original phase. This composite is distinct from a mixture of the carbon anode active material and the one or more elements selected from metals and metalloids.

In the present disclosure, the term "thickness" means average thickness. The average thickness can be measured using a scanning electron microscope.

Hereinbelow, an anode-solid electrolyte subassembly for an all-solid secondary battery according to an embodiment, an all-solid secondary battery including the same, and a method of preparing the same will be described in greater detail.

An all-solid secondary battery may include an interlayer containing silver (Ag) and carbon-based carbon particles to suppress lithium dendrite formation that may occur during charge and discharge processes, and to increase energy density. Using such interlayers facilitates diffusion and deposition of lithium on a current collector, wherein silver (Ag) serves to decrease the nucleation overpotential for lithium deposition, which may lead to a lower cell resistance. If such an interlayer is applied, the process of lithium being diffused into the interlayer may be greatly influenced by the operating temperature and pressure. In addition, if a discharge current as high as 1 C or more flows, the reversible capacity may decrease.

If the interlayer containing silver and carbon particles is applied, as the charging progresses, silver (Ag) can migrate to the current collector and stay as a solid solution with lithium metal, and a large number of particles may remain closer to the current collector when discharging. As a result, due to an insufficient Ag content at the interface between the solid electrolyte layer and the interlayer, there may be an increase of overvoltage, which can lead to an increased cell resistance.

To address some of the aforementioned issues, provided are an anode-solid electrolyte subassembly for an all-solid secondary battery, capable of improving high-rate capability and low-temperature operating performance, and an all-solid secondary battery containing the anode-solid electrolyte subassembly.

An anode-solid electrolyte subassembly according to an embodiment includes: an anode current collector; an anode active material layer disposed on the anode current collector; and a solid electrolyte disposed on the anode active material layer and opposing the anode current collector, wherein the anode active material layer includes a first anode active material layer disposed in contact with the solid electrolyte, and a second anode active material layer disposed in contact with the anode current collector, wherein the first anode active material layer includes a first anode active material containing: a mixture of i) a first carbon anode active material, and ii) one or more first elements selected from metals and metalloids; a composite of i) the first carbon anode active material and ii) the one or more first elements selected from metals and metalloids; or a combination thereof, wherein the second anode active material layer includes a second anode active material containing: a mixture of i) a second carbon anode active material and ii) one or more second elements selected from metals and metalloids; a composite of i) the second carbon anode active material and ii) the one or more second elements selected from metals and metalloids; or a combination thereof.

In the initial state of the battery, the amount of first elements in the first anode active material layer may be more than the amount of second elements in the second anode active material layer, and the amount of the first elements may be about 25 wt% to about 80 wt% with respect to the total weight of the first anode active material.

### All-Solid Secondary Battery

The amount of one or more first element selected from metals and metalloids in the first anode active material layer adjacent to the solid electrolyte may be, for example, about 25 wt% to about 70 wt%, about 25 wt% to about 60 wt%, or about 25 wt% to about 40 wt%, with respect to the total weight of the first anode active material. If the amount of the first element in the first anode active material layer is within the aforementioned ranges, after discharging of an all-solid secondary battery, the amount of the first element at the interface between the solid electrolyte and the first anode active material layer can increase so that the nucleation overpotential during the process of diffusion and deposition of lithium can be lowered, and as a result, the manufacture of an all-solid secondary battery having improved high-rate capability and low-temperature operating performance may be possible. The amount of one or more second element selected from metals and metalloids in the second anode active material layer adjacent to the anode current collector may be, for example, about 10 wt% to about 25 wt%, about 10 wt% to about 20 wt%, about 10 wt% to about 18 wt%, or about 10 wt% to about 15 wt%, with respect to the total weight of the second anode active material. If the amount of the second element in the second anode active material layer is within the aforementioned ranges, after discharging of an all-solid secondary battery, the overpotential may increase due to an insufficient second element content such as insufficient silver (Ag) content at the interface between the solid electrolyte layer and the interlayer, and as a result, the manufacture of an all-solid secondary battery having improved high-rate capability and low-temperature operating performance without an increase in cell resistance may be possible.

In the present disclosure, silver is taken as a non-limiting example of the first element and the second element.

The nucleation overpotential during diffusion and deposition of lithium may be lowered by virtue of a high silver concentration at the interface between the solid electrolyte and the first anode active material layer. In addition, it may be possible to address the issue of an increase in cell resistance during charging due to a decreased silver concentration at the interface between the solid electrolyte and the first anode active material layer as silver moves toward the current collector after charging and discharging. As such, because lithium diffusion resistance within the anode can be minimized, it may be possible to realize an all-solid secondary battery capable of high output and having improved low-temperature charge-discharge characteristics.

The total amount of the first elements and second elements in the anode active material layer may be, for example, about 1 wt% to about 65 wt%, about 10 wt% to about 55 wt%, about 15 wt% to about 55 wt%, or about 15 wt% to about 45 wt% with respect to the total weight of the first and second anode active materials (collectively, the anode active materials) in the anode active material layer. Here, the anode active material layer means the first and second anode active material layers combined. If the total amount of the first element and second element is within the aforementioned ranges, lithium diffusion resistance within the anode may be minimized so that an all-solid secondary battery having improved high output and low-temperature charge-discharge characteristics can be realized.

According to an embodiment, the difference between the amount of the first elements in the first anode active material layer and the amount of the second elements in the second anode active material layer may be about 10 wt% to about 70 wt%, about 15 wt% to about 30 wt%, or about 15 wt% to about 25 wt%. If the difference between the amount of the first element in the first anode active material layer and the amount of the second element in the second anode active material layer is within the aforementioned ranges, it may be possible to effectively prevent one or more selected from metals and metalloids from being locally concentrated in the anode active material layer adjacent to the anode current collector after discharging.

According to another embodiment, the difference between the amount of the first element in the first anode active material layer and the amount of the second element in the second anode active material layer may be, for example, about 10 wt% to about 50 wt%, or about 10 wt% to about 24 wt%.

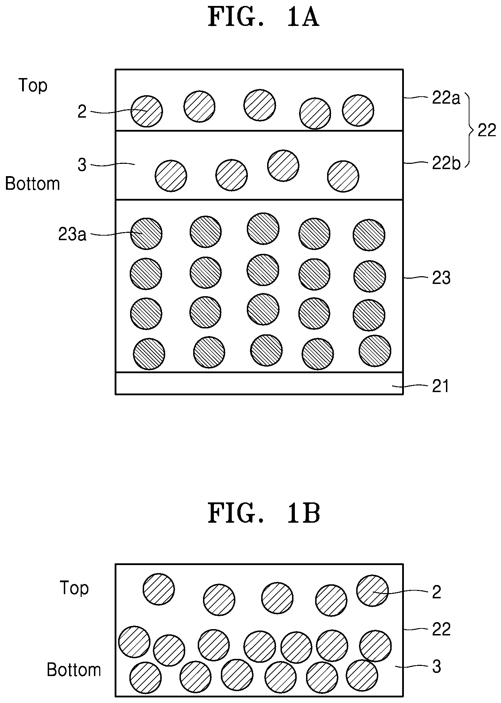

FIG. 1A shows an anode of an all-solid secondary battery according to an embodiment, and shows the anode structure after charging. FIG. 1B shows the structure of the anode of FIG. 1A after discharging.

An anode according to an embodiment may include an anode current collector 21; a lithium metal layer 23 disposed on the anode current collector 21; and an anode active material layer 22 disposed on the lithium metal layer 23. The lithium metal layer 23 may be present during battery assembly or may be formed after charging. Silver 2 may be uniformly present in the anode active material layer 22 after charging.

As shown in FIG. 1B, the anode active material layer 22 may include the silver 2 and a carbon-based anode active material 3. Further, after discharging, the anode may have an increased amount of the silver 2 in the anode active material layer 22 in a region in contact with the anode current collector 21.

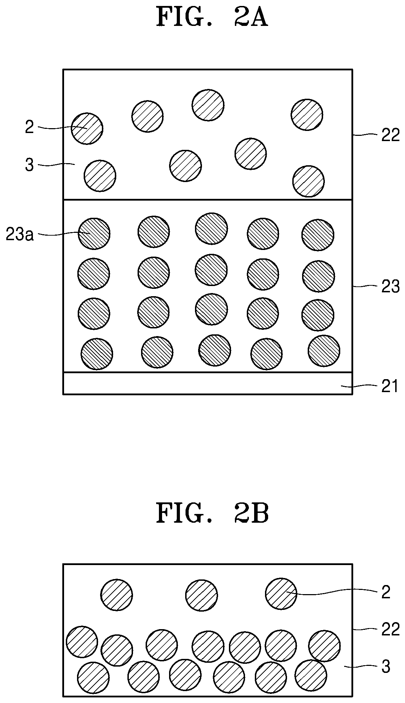

FIGS. 2A and 2B show a state of a common anode after charging and discharging. The silver (Ag) 2 in the anode may be uniformly distributed in the anode active material layer 22 as shown in FIG. 2A after charging. In comparison, the anode in FIG. 2B after discharging has a higher amount of silver (3) in the area adjacent to the anode current collector in the anode active material layer 22. In an all-solid secondary battery having such an anode, because after charging and discharging, silver (Ag) moves toward the current collector, the concentration of silver (Ag) at the interface between the solid electrolyte and the anode active material layer decreases and as a result, the cell resistance may increase when charging, and the cell performance may deteriorate.

In an anode according to an embodiment, after charging, as shown in FIG. 1A, the amount of silver in the first anode active material layer 22a may remain higher than the amount of silver in the second anode active material layer 22b disposed on the lithium metal layer 23 containing lithium 23a. Further, after discharging, as shown in FIG. 1B, the difference in silver content between a first region (top) of the anode active material layer 22, which contacts the solid electrolyte layer, and a second region (bottom) of the anode active material layer, which is close to the lithium plated layer and the anode current collector, may be relatively decreased compared to the case shown in FIG. 2B. Accordingly, as a decrease in Ag concentration in the anode active material layer adjacent to the solid electrolyte layer is suppressed, an increase in the cell resistance when charging may be effectively prevented. The first anode active material layer 22a and the second anode active material layer 22b, as shown in FIG. 1A, may contain a carbon or carbon-based anode active material 3 and a metal, such as silver 2. Further, the first anode active material layer 22a and the second anode active material layer 22b, although illustrated as having the same thickness in FIG. 1A, may have a different thickness to each other.

According to an embodiment, in the anode active material layer shown in FIG. 1B, between the first region (top) of the anode active material layer that contacts the solid electrolyte layer, and the second region (bottom) of the anode active material layer, the difference in the amount of an element, such as silver, may be 25 wt% or less, or about 15 wt% to about 25 wt%, and such differences may be confirmed by SEM-EDX analysis.

In the present disclosure, with respect to a total distance from a point of contact with the anode current collector to a point of contact of the anode active material layer with the solid electrolyte, the first region (top) of the anode active material layer refers to a region of about 50 length% to about 80 length% from the point of contact with the solid electrolyte. In addition, with respect to a total distance from a point of contact with the anode current collector to a point of contact with the solid electrolyte, the second region (bottom) of the anode active material layer refers to a region of about 20 length% to about 50 length% from the point of contact with the anode current collector. According to an embodiment, with respect to a total distance from a point of contact with the anode current collector to a point of contact with the solid electrolyte, the first region refers to a region of about 50 length% from the point of contact with the solid electrolyte, and the second region refers to a region of about 50 length% from the point of contact with the anode current collector with respect to a total distance from a point of contact with the anode current collector to a point of contact with the solid electrolyte.

In a discharged state of the all-solid secondary battery after the formation process, the difference between the amount of one or more selected from metals and metalloids in the first region, and the amount of one or more selected from metals and metalloids in the second region may be 25 wt% or less. The amount of one or more selected from metals and metalloids in the second region may be more than the amount of one or more selected from metals and metalloids in the first region, wherein the difference therebetween may be about 1 wt% to about 25 wt%.

The first anode active material layer and the second anode active material layer, as described above, may utilize a carbon anode active material having one or more selected from metals and metalloids supported thereon.

According to an embodiment, the first anode active material layer may include a material having a first element supported on a first carbon anode active material, and the second anode active material layer may include a material having a second element supported on a second carbon anode active material. For example, the first element and the second element may be fixed on the respective first and second carbon anode active materials.

For example, if the first anode active material layer utilizes a first carbon anode active material on which one or more selected from metals and metalloids are supported, compared to when using a mixture of the first carbon anode active material and the one or more selected from metals and metalloids, the one or more selected from metals and metalloids, e.g., Ag, may be fixed on the first carbon anode active material so that the migration of silver toward the current collector during charging and discharging may be effectively suppressed, thereby allowing the silver (Ag) concentration at the solid electrolyte interface to remain high. That is, if the first anode active material layer includes one or more selected from metals and metalloids supported on a first carbon anode active material, lithium diffusion resistance within the anode may be minimized so that an all-solid battery having improved high output and low-temperature operating characteristics may be realized.

In the present specification, the term "size" refers to a particle diameter or an average particle diameter if the particle is spherical, and refers to a major axis length or an average major axis length if the particle is non-spherical. The size of particles may be measured using a scanning electron microscope or a particle size analyzer. For example, the particle size analyzer may be LA-950 laser particle size analyzer by HORIBA. When the size of particles is measured using a particle size analyzer, the average particle diameter refers to D50. D50 means a diameter, or the average diameter of particles corresponding to cumulative volume 50 vol%, and on a distribution curve in which the particles are accumulated from the smallest particle size to the largest particle size, when the total number of particles is 100 %, means a value of particle diameter that corresponds to 50 % from the smallest particles. In the present disclosure, "particle size" and "particle diameter" are used interchangeably.

The size of cathode active material in the present specification may be, for example, a median particle diameter D50 as measured by a laser-type particle size distribution analyzer.

The average particle diameter of the solid electrolyte may be measured using a laser diffraction method. More specifically, the cathode active material or the solid electrolyte may be dispersed in a solution and introduced into a commercial laser diffraction particle size measurement device (e.g., Microtrac MT 3000) to undergo ultrasonic radiation at about 28 kHz and a power output of 60 Watts, and the average particle diameter (D50) may be calculated based on 50 % in the particle size distribution according to the measurement device.

The average particle diameter in the present specification may be a median particle diameter as measured by a laser-type particle size distribution analyzer.

The term "D10" as used herein may refer to an average diameter of particles corresponding to a cumulative 10 vol% in a particle size distribution, and the term "D90" as used herein may refer to an average diameter of particles corresponding to a cumulative 90 vol% in a particle size distribution.

According to an embodiment, the first anode active material layer and the second anode active material layer may each have a thickness of about 1 µm to about 10 µm, about 1 µm to about 9 µm, about 1 µm to about 8 µm, for example, about 2 µm to about 8 µm, or about 3 µm to about 5 µm.

In the present disclosure, the thickness of the second anode active material layer may be identical to the thickness of the first anode active material layer, or the thickness of the second anode active material layer may be more than the thickness of the first anode active material layer. The ratio of the thickness of the second anode active material layer and the thickness of the first anode active material layer may be about 1:0.25 to about 1:1. The thickness of the first anode active material layer may be about 2 µm to about 5 µm, and the thickness of the second anode active material layer may be about 5 µm to about 8 µm. If the first and second anode active material layers have a thickness ratio in the aforementioned ranges, the first elements and/or second elements may be uniformly present in the anode active material layer after discharging so that discharge capacity and average voltage characteristics may be improved, and an all-solid secondary battery having improved high-rate capability and low-temperature charge-discharge characteristics may be prepared.

In the present disclosure, a solid electrolyte may include a sulfide solid electrolyte, an oxide solid electrolyte, a polymer solid electrolyte, a gel electrolyte, or a combination thereof, wherein the gel electrolyte may include a polymer gel electrolyte.

The sulfide solid electrolyte may be, for example, one or more selected from Li₂S-P₂S₅ and Li₂S-P₂S₅-LiX, wherein X may be a halogen element; Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, and Li₂S-P₂S₅-ZₘSₙ, wherein m and n each are a positive number, and Z may be Ge, Zn or Ga; Li₂S-GeS₂, Li₂S-SiS₂-Li₃PO₄, and Li₂S-SiS₂-LiₚMO_{q}, wherein p and q each are a positive number and M may be P, Si, Ge, B, Al, Ga or In; Li₇₋ₓPS₆₋ₓClₓ, wherein 0≤x≤2; Li₇₋ₓPS₆₋ₓBrₓ, wherein 0≤x≤2; Li₇₋ₓPS₆₋ₓIₓ, wherein 0≤x≤2; and LiₐPS_{b}(Cl)_{d} (5≤a < 7, 4≤b≤6, and 0<d≤2).

The sulfide solid electrolyte may be, for example, an argyrodite-type compound including one or more selected from Li₆PS₅Cl, Li₆PS₅Br, Li₆PS₅I, and LiₐPS_{b}(Cl)_{d} (5≤a < 7, 4≤b≤6, and 0<d≤2).

The sulfide solid electrolyte may be prepared by treating starting materials, such as Li₂S and P₂S₅, by a method such as melt-quenching, mechanical milling, and the like. In addition, following such a treatment, a heat treatment may be conducted. The sulfide solid electrolyte may be amorphous or crystalline, or may be in a mixed state between amorphous and crystalline. In addition, the solid electrolyte may be, among the sulfide solid electrolyte materials described herein, a material that contains at least sulfur (S), phosphorus (P), and lithium (Li), as its constitutive elements. For example, the solid electrolyte may be a material including Li₂S-P₂S₅. If a sulfide solid electrolyte material used to form the solid electrolyte contains Li₂S-P₂S₅, the mixing molar ratio of Li₂S : P₂S₅ may be in a range of, for example, about 20 : 80 to about 90 : 10, about 25 : 75 to about 90 : 10, about 30 : 70 to about 70: 30, or about 40 : 60 to about 60 : 40.

For example, the sulfide solid electrolyte may include an argyrodite-type solid electrolyte represented by Formula 1:

Formula 1 Li⁺₁₂₋ₙ₋ₓAⁿ⁺X²⁻₆₋ₓY⁻ₓ

In Formula 1, A may be P, As, Ge, Ga, Sb, Si, Sn, Al, In, Ti, V, Nb or Ta; X may be S, Se or Te; Y may be Cl, Br, I, F, CN, OCN, SCN, or N₃; and 1≤n≤5 and 0≤x≤2. For example, the sulfide solid electrolyte may be an argyrodite-type compound including one or more selected from Li₇₋ₓPS₆₋ₓClₓ wherein 0≤x≤2, Li₇₋ₓPS₆₋ₓBrₓ wherein 0≤x≤2, and Li₇₋ₓPS₆₋ₓIₓ wherein 0≤x≤2. The sulfide solid electrolyte may be, for example, an argyrodite-type compound including one or more selected from Li₆PS₅Cl, Li₆PS₅Br, Li₆PS₅I, and LiₐPS_{b}(Cl)_{d} (5≤a < 7, 4≤b≤6, and 0<d≤2).

An argyrodite-type solid electrolyte may have a density of about 1.5 g/cc to about 2.0 g/cc. With the argyrodite-type solid electrolyte having a density of 1.5 g/cc or more, the internal resistance of an all-solid secondary battery may be reduced, and Li penetration to the solid electrolyte layer may be more effectively suppressed. The sulfide solid electrolyte may have excellent ionic conductivity and chemical stability. Accordingly, the sulfide solid electrolyte may provide improved stability with respect to air and electrochemical stability with respect to lithium metal.

The sulfide solid electrolyte may include an argyrodite-type solid electrolyte, the argyrodite-type solid electrolyte may include one or more selected from Li₆PS₅Cl, Li₆PS₅Br, Li₆PS₅I, Li_{5.75}PS_{4.75}Cl_{1.25}, Li_{6.25}PS₅Cl_{1.25}, and Li₆PS_{4.875}Cl_{1.25}, and the argyrodite-type solid electrolyte may have a density of about 1.5 g/cc to about 2.0 g/cc.

The sulfide solid electrolyte may have an ionic conductivity at 25 °C of about 1 mS/cm to about 7 mS/cm, or about 1 mS/cm to about 6 mS/cm.

The oxide all-solid electrolyte may be, for example, Li_{1+x+y}AlₓTi₂₋ₓSi_{y}P_{3-y}O₁₂ (0<x<2 and 0≤y<3), BaTiO₃, Pb(Zr,Ti)O₃ (PZT), Pb₁₋ₓLaₓZr_{1-y}Ti_{y}O₃ (PLZT) (0≤x<1 and 0≤y<1), Pb(Mg_{1/3}Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (0<x<2 and 0<y<3), LiₓAl_{y}Ti_{z}(PO₄)₃ (0<x<2, 0<y<1, and 0<z<3), Li_{1+x+y}(Al, Ga)ₓ(Ti, Ge)₂₋ₓSi_{y}P_{3-y}O₁₂ (0≤x≤1 and 0≤y≤1), LiₓLa_{y}TiO₃ (0<x<2 and 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂ (M = Te, Nb, or Zr, and 0≤x≤10), or a combination thereof. The oxide solid electrolyte may be produced, for example, by a sintering method or the like.

For example, the oxide solid electrolyte may be a garnet-type solid electrolyte selected from Li₇La₃Zr₂O₁₂ (LLZO) and Li₃₊ₓLa₃Zr₂₋ₐMₐO₁₂ (M doped LLZO, M=Ga, W, Nb, Ta, or Al, and 0<a<2 and 0≤x≤10).

For example, the polymer solid electrolyte may include a mixture of a lithium salt and a polymer, or may include a polymer having an ion-conducting functional group. For example, the polymer solid electrolyte may be a polymer electrolyte that is in a solid state at 25 °C and 1 atm. For example, the polymer solid electrolyte may not contain liquid. The polymer solid electrolyte may include a polymer. For example, the polymer may be polyethylene oxide (PEO), polyvinylidene fluoride (PVDF), polyvinylidene fluoride-hexafluoropropylene (PVDF-HFP), a poly(styrene-b-ethylene oxide) block copolymer (PS-PEO), poly(styrene-butadiene), poly(styrene-isoprene-styrene), a poly(styrene-b-divinylbenzene) block copolymer, a poly(styrene-ethylene oxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone (SPAEKKS), sulfonated poly(aryl ether ketone (SPAEK), poly[bis(benzimidazobenzisoquinolinones)] (SPBIBI), and lithium 9,10-diphenylanthracene-2-sulfonate (DPASLi+), or a combination thereof. However, the polymer is not limited to the aforementioned examples and may be any material available in the art that is used in polymer electrolyte. The lithium salt may be any lithium salt available in the art. The lithium salt may be, for example, LiPF₆, LiBF₄, LiSbF₆, LiAsF₆, LiClO₄, LiCF₃SO₃, Li(CF₃SO₂)₂N, Li(FSO₂)₂N, LiC₄F₉SO₃, LiAlO₂, LiAlCl₄, LiN(CₓF₂ₓ₊₁SO₂)(C_{y}F_{2y+1}SO₂) (x and y are each an integer of 1 to 20), LiCl, Lil, or a mixture thereof. For example, the polymer included in the polymer solid electrolyte may be a compound containing 10 or more repeating units, 20 or more repeating units, 50 or more repeating units, or 100 or more repeating units. For example, the polymer included in the polymer solid electrolyte may have a weight average molecular weight of 1,000 Dalton or more, 10,000 Dalton or more, 100,000 Dalton or more, or 1,000,000 Dalton or more.

The gel electrolyte may be, for example, a polymer gel electrolyte. For example, the gel electrolyte may have a gel state while not containing a polymer.

For example, the polymer gel electrolyte may include a liquid electrolyte and a polymer, or may include an organic solvent and a polymer having an ion-conducting functional group. The polymer gel electrolyte may be, for example, a polymer electrolyte that is in a gel state at 25 °C and 1 atm. For example, the polymer gel electrolyte may have a gel state without containing liquid. The liquid electrolytes used in the polymer gel electrolytes may be, for example, a mixture of an ionic liquid, a lithium salt, and an organic solvent; a mixture of a lithium salt and an organic solvent; a mixture of an ionic liquid and an organic solvent; or a mixture of a lithium salt, and an ionic liquid. The polymer used in the polymer gel electrolyte may be selected from the polymers used in the solid polymer electrolyte. The organic solvent may be selected from the organic solvents used in the liquid electrolyte. The lithium salt may be selected from the lithium salts used in the polymer solid electrolyte. The ionic liquid may refer to a room-temperature molten salt or a salt that is in a liquid state at room temperature, which consists of ions alone and has a melting point of room temperature or less. For example, the ionic liquid may be at least one selected from compounds containing: a) at least one cation selected from ammonium, pyrrolidinium, pyridinium, pyrimidinium, imidazolium, piperidinium, pyrazolium, oxazolium, pyridazinium, phosphonium, sulfonium, triazolium, and a mixture thereof; and b) at least one anion selected from BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, SO₄⁻, CF₃SO₃⁻, (FSO₂)₂N⁻, (C₂F₅SO₂)₂N⁻, (C₂F₅SO₂)(CF₃SO₂)N⁻, and (CF₃SO₂)₂N⁻. For example, the polymer solid electrolyte may form a polymer gel electrolyte by impregnation in a liquid electrolyte in a secondary battery. The polymer gel electrolyte may further include inorganic particles. For example, the polymer included in the polymer gel electrolyte may be a compound containing 10 or more repeating units, 20 or more repeating units, 50 or more repeating units, or 100 or more repeating units. For example, the polymer included in the polymer gel electrolyte may have a weight average molecular weight of 500 Dalton or more, 1,000 Dalton or more, 10,000 Dalton or more, 100,000 Dalton or more, or 1,000,000 Dalton or more.

The anode may further include a binder. The binder may contain one or more selected from a styrene-butadiene-styrene copolymer, acrylic resin, styrene-butadiene rubber (SBR), polytetrafluoroethylene (PTFE), polyvinylidene fluoride (PVDF), polyethylene, a vinylidenefluoride/hexafluoropropylene copolymer, polyacrylonitrile, and polymethyl methacrylate.

According to another aspect, provided are an all-solid secondary battery including a cathode; and an anode-solid electrolyte subassembly according to an embodiment disposed on the cathode, wherein a solid electrolyte of the anode-solid electrolyte subassembly is disposed between the cathode and the anode.

Hereinbelow, with reference to the accompanied drawings, an all-solid secondary battery according to an embodiment will be described in greater detail.

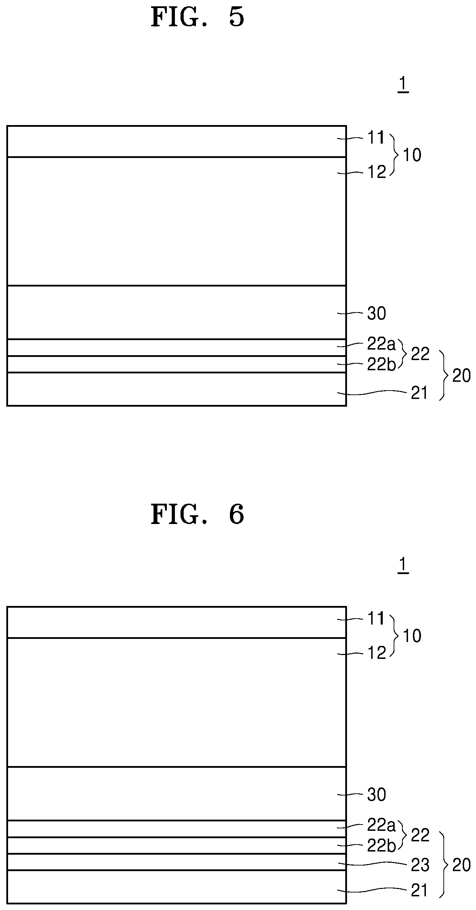

Referring to FIGS. 5 and 6, an all-solid secondary battery 1 may contain an anode 20 including an anode current collector 21 and an anode active material layer 22; a cathode 10 including a cathode current collector 11 and a cathode active material layer 12; and a solid electrolyte 30 disposed between the anode 20 and the cathode 10. The all-solid secondary battery may contain an anode-solid electrolyte subassembly according to an embodiment. The anode active material layer 22 may contain a first anode active material layer 22a and a second anode active material layer 22b.

The cathode 10 may contain a conductive material. The cathode 10 may contain a binder.

### Anode

The anode 20 may include the anode current collector 21 and the anode active material layer 22, and the anode active material layer 22 may include an anode active material. The anode active material layer 22 may contain the first anode active material layer 22a disposed in contact with a solid electrolyte layer 30 and the second anode active material layer 22b.

An anode active material included in the first anode active material layer 22a and the second anode active material layer 22b may have, for example, a particulate form. The anode active material having a particulate form may have an average particle diameter of, for example, 4 µm or less, 3 µm or less, 2 µm or less, 1 µm or less, or 900 nm or less. The average particle diameter of the anode active material having a particulate form may be, for example, from about 10 nm to about 4 µm, about 10 nm to about 3 µm, about 10 nm to about 2 µm, about 10 nm to about 1 µm, or about 10 nm to 900 nm. With the anode active material having an average particle diameter within the above ranges, reversible absorption and/or desorption of lithium during charging/discharging may be facilitated. The average particle diameter of the anode active material may be, for example, a median particle diameter (D50) as measured by a laser-type particle size distribution analyzer.

The anode active material may include a carbon or carbon-based anode active material and one or more selected from metal or metalloid anode active materials, and the carbon or carbon-based anode active material may include one or more selected from amorphous carbon and crystalline carbon. The metal or metalloid anode active material may be silver (Ag), indium (In), silicon (Si), gallium (Ga), tin (Sn), aluminum (Al), titanium (Ti), zirconium (Zr), niobium (Nb), germanium (Ge), antimony (Sb), gold (Au), platinum (Pt), palladium (Pd), magnesium (Mg), zinc (Zn), nickel, iron, cobalt, chromium, cesium, sodium, potassium, calcium, yttrium, bismuth, tantalum, hafnium, barium, vanadium, strontium, lanthanum, or a combination thereof.

The anode active material layer may include i) a composite of first particles composed of amorphous carbon and second particles composed of a metal or a metalloid or ii) a mixture of first particles composed of amorphous carbon and second particles composed of a metal or a metalloid, wherein the amount of the second particles may be about 1 wt% to about 60 wt% with respect to the total weight of the composite.

A solid electrolyte of the anode-solid electrolyte subassembly may include a solid electrolyte, or a combination of a solid electrolyte and a gel electrolyte, wherein the solid electrolyte may include a sulfide solid electrolyte, an oxide solid electrolyte, a polymer solid electrolyte, or a combination thereof, and the gel electrolyte may include a polymer gel electrolyte.

The anode current collector, the anode active material layer, and the area therebetween may be a lithium (Li) metal-free region that is free of Li metal while the all-solid secondary battery 1 is in the initial state or a state after discharge.

A third anode active material layer 23 may be further included at least between the anode current collector and the anode active material layer 22, or between the solid electrolyte layer 30 and the anode active material layer 22, wherein the third anode active material layer 23 may be a metal layer including lithium or a lithium alloy.

Examples of the amorphous carbon may include carbon black (CB), acetylene black (AB), furnace black (FB), Ketjen black (KB), graphene, and the like; however, the carbon or carbon-based anode active material is not limited to the aforementioned examples and may be any material that is categorized as amorphous carbon in the art. Amorphous carbon is carbon with no crystalline structure or with an extremely low degree of crystallinity and as such, may be distinct from crystalline carbon or graphitic carbon.

Among these anode active materials, the anode active material layer 22 may include a mixture of a plurality of different anode active materials. For example, the first and second anode active material layers 22a and 22b may each independently include a mixture of amorphous carbon with one or more selected from gold (Au), platinum (Pt), palladium (Pd), silicon (Si), silver (Ag), aluminum (Al), bismuth (Bi), tin (Sn), and zinc (Zn). The mixing ratio of amorphous carbon to the metal(s) described herein, such as gold (Au) in the mixture may be, in weight ratio, for example, about 10:1 to about 1:2, about 5:1 to about 1:1, or about 4:1 to about 2:1. However, the mixing ratio is not limited to the aforementioned ranges and may be selected according to a required feature of the all-solid secondary battery 1. If the anode active material has the above composition, the cycling performance of the all-solid secondary battery 1 may further improve.

The anode active material included in the anode active material layer 22 may include, for example, a mixture of first particles and second particles, the first particles being composed of amorphous carbon, and the second particles being composed of a metal or a metalloid. Examples of the metal or metalloid may include gold (Au), platinum (Pt), palladium (Pd), silicon (Si), silver (Ag), aluminum (Al), bismuth (Bi), tin (Sn), zinc (Zn), and the like. In other embodiments, the metalloid may be a semiconductor.

The anode active material layer 22 may include, for example, a binder. The binder may be, for example, styrene butadiene rubber (SBR), polytetrafluoroethylene (PTFE), polyvinylidene fluoride (PVDF), polyethylene, a vinylidene fluoride/hexafluoropropylene copolymer, polyacrylonitrile, polymethylmethacrylate, or the like. However, the binder is not limited to the aforementioned examples and may be any material available as a binder in the art. The binder may be composed of a single type of binder, or multiple binders of different types.

Because the anode active material layer 22 includes a binder, the anode active material layer 22 may be stabilized on the anode current collector 21. Further, crack formation in the anode active material layer 22 may be suppressed, despite volume changes and/or displacement of the anode active material layer 22 during charging and discharging processes. For example, if the anode active material layer 22 does not contain any binder, the anode active material layer 22 may be easily delaminated from the anode current collector 21. At a part where the anode active material layer 22 is separated from the anode current collector 21, the anode current collector 21 may be exposed and come in contact with the solid electrolyte layer 30, increasing the likelihood of a short-circuit. For example, the anode active material layer 22 may be prepared by applying and drying a slurry having dispersed therein materials forming the anode active material layer 22 on the anode current collector 21. By including a binder in the anode active material layer 22, stable dispersion of the anode active materials within the slurry may be achieved. For example, if the slurry is to be applied onto the anode current collector 21 by a screen-printing method, it may be possible to prevent the screen from clogging (for example, clogging by agglomerates of the anode active material).

For example, the anode active material layer may have a thickness of 50 % or less, 40 % or less, 30 % or less, 20 % or less, 10 % or less, or 5 % or less, with respect to the thickness of the cathode active material layer. The anode active material layer may have, for example, a thickness of about 1 µm to about 20 µm, about 2 µm to about 10 µm, or about 3 µm to about 7 µm. If the anode active material layer is excessively thin, lithium dendrites formed between the anode active material layer 22 and the anode current collector 21 may cause disintegration of the anode active material layer 22, thus making it difficult to achieve improved cycling performance of the all-solid secondary battery 1. If the thickness of the anode active material layer excessively increases, the energy density of the all-solid secondary battery 1 decreases while the internal resistance of the all-solid secondary battery 1 by the anode active material layer 22 increases, and therefore, it may be difficult to achieve improved cycling performance of the all-solid secondary battery 1.

The amount of the binder included in the anode active material layer may be, for example, about 0.1 wt% to about 10 wt%, or about 0.1 wt% to about 5 wt%, with respect to the total weight of the anode active material layer. The anode active material layer may comprise a conductive material. The amount of the conductive material included in the anode active material layer may be, for example, about 0.1 wt% to about 10 wt%, or about 0.1 wt% to about 5 wt%, with respect to the total weight of the anode active material layer. The amount of the anode active material included in the anode active material layer may be, for example, about 90 wt% to about 99 wt%, or about 95 wt% to about 99 wt% with respect to the total weight of the anode active material layer.

The anode current collector may be formed of a material that does not react with lithium, for example, does not form an alloy or a compound with lithium. Examples of the material forming the anode current collector may include copper (Cu), stainless steel, titanium (Ti), iron (Fe), cobalt (Co), nickel (Ni), and the like. However, the material forming the anode current collector 21 is not necessarily limited to the aforementioned materials but may be any material available as an electrode current collector in the art. The anode current collector may be formed of one type of the aforementioned metals, an alloy of two or more types of metals thereof, or a covering material. The anode current collector may be, for example, a plate type or a foil type.

The anode current collector may include, for example, a base film, and a metal layer disposed on one side or both sides of the base film. For example, the base film may include a polymer. For example, the polymer may include polyethylene terephthalate (PET), polyethylene (PE), polypropylene (PP), polybutylene terephthalate (PBT), polyimide (PI), or a combination thereof. For example, the metal layer may include indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. With the anode current collector having the aforementioned structure, the weight of the electrodes may be reduced, which as a result may lead to improved energy density of a lithium battery.

The anode active material layer 22 may further include other additives used in a conventional all-solid secondary battery, such as a filler, a dispersing agent, an ion-conducting agent, and the like.

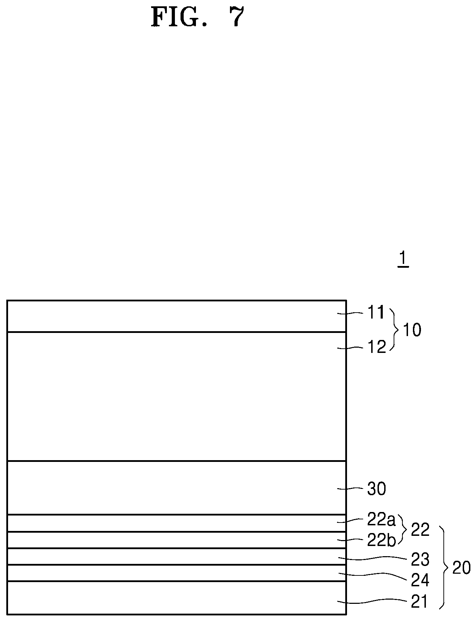

Referring to FIG. 7, the all-solid secondary battery 1 may further include a thin film 24 containing an element capable of forming an alloy with lithium, for example, on the anode current collector 21. The thin film 24 may be positioned between the anode current collector 21 and the anode active material layer 22. The thin film 24 may include, for example, an element alloyable with lithium. Examples of the element capable of forming an alloy with lithium may include gold, silver, zinc, tin, indium, silicon, aluminum, bismuth, or the like, but without being limited thereto, any element available in the art that is capable of forming an alloy with lithium may be utilized. The thin film 24 may be composed of one of the aforementioned metals or may be composed of an alloy of different kinds of metals. If the thin film 24 is disposed on the anode current collector 21, the third anode active material layer 23 being plated between the thin film 24 and the second anode active material layer 22b may have a further flattened form, and the all-solid secondary battery 1 may have further improved cycling performance.

For example, the thin film may have a thickness of about 1 nm to about 800 nm, about 10 nm to about 700 nm, about 50 nm to about 600 nm, or about 100 nm to about 500 nm. If the thickness of the thin film 24 is less than 1 nm, it may be difficult to achieve functions attributable to the thin film 24. If the thickness of the thin film 24 is excessively large, the amount of lithium being plated at the anode is decreased, and as a result, the all-solid secondary battery 1 may have decreased energy density and deteriorated cycling performance. The thin film 24 may be positioned on the anode current collectors 21 by a vacuum deposition method, a sputtering method, a plating method or the like, but is not limited to the aforementioned methods and may be any method available in the art that is capable of forming the thin film 24.

The all-solid secondary battery 1 may further include a third anode active material layer 23, which is disposed, for example, between the anode current collector 21 and the solid electrolyte layer 30 by charging. The all-solid secondary battery 1 may further include the third anode active material layer 23, which is disposed, for example, between the anode current collector 21 and the anode active material layer 22 by charging. Although not shown in the drawings, the all-solid secondary battery 1 may further include the third anode active material layer 23, which is disposed, for example, between the solid electrolyte layer 30 and the anode active material layer 22 by charging. Although not shown in the drawings, the all-solid secondary battery 1 may further include the third anode active material layer 23, which is disposed, for example, within the anode active material layer 22 by charging.

The third anode active material layer 23 may be, for example, a lithium metal layer containing lithium or a lithium alloy. The lithium metal layer may include lithium or a lithium alloy. Accordingly, the third anode active material layer 23, as it is a metal layer containing lithium, may serve as a lithium reservoir, for example. The lithium alloy may include, for example, a Li-Al alloy, a Li-Sn alloy, a Li-In alloy, a Li-Ag alloy, a Li-Au alloy, a Li-Zn alloy, a Li-Ge alloy, a Li-Si alloy, or the like, but without being limited thereto, may be any material available as a lithium alloy in the art. The third anode active material layer 23 may be composed of one of such alloys, or lithium, or may be composed of various types of alloys.

The third anode active material layer 23 is not limited to any particular thickness, but may have, for example, a thickness of about 1 µm to about 1,000 µm, about 1 µm to about 500 µm, about 1 µm to about 200 µm, about 1 µm to about 150 µm, about 1 µm to about 100 µm, or about 1 µm to about 50 µm. If the third anode active material layer is excessively thin, the third anode active material layer 23 may fail to function as a lithium reservoir. If the third anode active material layer is excessively thick, the mass and volume of the all-solid secondary battery 1 may increase, while the cycling performance rather deteriorates. The third anode active material layer 23 may be, for example, a metal foil having a thickness in the aforementioned ranges.

In the all-solid secondary battery 1, the third anode active material layer 23 may be, for example, disposed between the anode current collector 21 and the anode active material layer 22 prior to assembly of the all-solid secondary battery 1, or the third anode active material layer 23 may be plated between the anode current collector 21 and the anode active material layer 22 after assembly of the all-solid secondary battery 1.

If the third anode active material layer 23 is to be disposed between the anode current collector 21 and the anode active material layer 22 prior to assembly of the all-solid secondary battery 1, the third anode active material layer 23, as it is a metal layer containing lithium, may act as a lithium reservoir. The all-solid secondary battery 1 including the third anode active material layer 23 may have further improved cycling performance. For example, prior to assembly of the all-solid secondary battery 1, a lithium foil may be positioned between the anode current collector 21 and the anode active material layer 22.

If the third anode active material layer 23 is to be disposed by charging after assembly of the all-solid secondary battery 1, because the third anode active material layer 23 is not included at the time of assembly of the all-solid secondary battery 1, the all-solid secondary battery 1 may have increased energy density. For example, when charging the all-solid secondary battery 1, the charging may be performed to exceed the charge capacity of the anode active material layer 22. The anode active material layer 22 may be then overcharged. At the beginning of the charging, lithium may be absorbed into the anode active material layer 22. The anode active material included in the anode active material layer 22 may form an alloy or a compound with lithium ions moved from the cathode 10. If the charging is performed exceeding the capacity of the anode active material layer 22, lithium may be plated, for example, on the back surface of the anode active material layer 22, for example, between the anode current collector 21 and the anode active material layer 22, and the plated lithium may then form a metal layer that corresponds to the third anode active material layer 23. The third anode active material layer 23 may be a metal layer mainly composed of lithium (i.e., metal lithium). This result may be obtained from the fact that the anode active material included in the anode active material layer 22 is constituted of a material that forms an alloy or compound with lithium. During discharge, lithium in metal layers, for example, in the anode active material layer 22 and the third anode active material layer 23, may be ionized and migrate toward the cathode 10. Further, because the anode active material layer 22 covers the third anode active material layer 23, the anode active material layer 22 may function as a protective layer for the third anode active material layer 23, that is, a metal layer, while suppressing precipitation and growth of lithium dendrites. In some embodiments, a short circuit and capacity fading in the all-solid secondary battery 1 may be suppressed, and consequently, the cycling performance of the all-solid secondary battery 1 may improve. Further, if the third anode active material layer 23 is positioned by charging after assembly of the all-solid secondary battery 1, the anode current collector 21, the anode active material layer 22, and the region therebetween may be, for example, a Li-free region that does not include lithium (Li) metal or lithium (Li) alloy while the all-solid secondary battery 1 is in the initial state or in a state after discharging.

The all-solid secondary battery 1 may have a structure in which the third anode active material layer 23 is disposed on the anode current collector 21, and the solid electrolyte layer 30 is directly disposed on the third anode active material layer 23. The third anode active material layer 23 may be, for example, a lithium metal layer or a lithium alloy layer.

Because inclusion of the aforementioned sulfide solid electrolyte in the solid electrolyte layer 30 suppresses side reactions between the third anode active material layer 23, which is a lithium metal layer, and the solid electrolyte layer 30, the cycling performance of the all-solid secondary battery 1 may improve.

### Solid Electrolyte Layer

The solid electrolyte layer 30 may contain an oxide solid electrolyte, a sulfide solid electrolyte, a polymer electrolyte, or a combination thereof.

The solid electrolyte layer 30 may further include, for example, a binder. The binder included in the solid electrolyte layer 30 may include, for example, one or more selected from a styrene-butadiene-styrene copolymer, acrylic resin, styrene-butadiene rubber (SBR), polytetrafluoroethylene, polyvinylidene fluoride, polyethylene, a vinylidene fluoride/hexafluoropropylene copolymer, polyacrylonitrile, and polymethylmethacrylate, however, without being limited to the aforementioned examples, any material available as a binder in the art may be utilized. The binder in the solid electrolyte layer 30 may be the same binder or a different binder as a binder included in the cathode active material layer 12 and the anode active material layer 22.

According to an embodiment, the solid electrolyte layer 30 may utilize a styrene-butadiene-styrene copolymer, (meth)acrylic resin, or a combination thereof as a binder.

The amount of the binder in the solid electrolyte layer may be about 0.5 parts by weight to about 2.0 parts by weight with respect to 100 parts by weight of the total weight of the solid electrolyte and the binder.

In a solid electrolyte-forming composition, a dispersant may be further added. The dispersant may include KD14, KD9, and KD13 by Croda, and DISPERBYK, etc. by BYK, and such dispersants are examples of nonionic polymeric dispersants. Examples of DISPERBYK by BYK may include DISPERBYK-180 and DISPERBYK-192.

### Cathode

The cathode 10 may include a cathode current collector 11 and a cathode active material layer 12.

For example, the cathode current collector 11 may utilize a plate, a foil, or the like, formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The cathode current collector 11 may be omitted.

The cathode active material layer 12 may include a bimodal cathode active material and a solid electrolyte. The solid electrolyte included in the cathode 10 may be similar to or different from the solid electrolyte included in the solid electrolyte 30. According to an embodiment, the solid electrolyte may contain a sulfide solid electrolyte according to an embodiment.

The cathode may contain a cathode active material.

The cathode active material may include, for example, an oxide-based cathode active material, a sulfide cathode active material, or a combination thereof.

The oxide-based cathode active material may include, for example, a lithium transition metal oxide, a metal oxide, or a combination thereof. The lithium transition metal oxide may include, for example, a lithium cobalt oxide, a lithium nickel oxide, a lithium nickel cobalt oxide, a lithium nickel cobalt aluminum oxide, a lithium nickel cobalt manganese oxide, a lithium manganate, a lithium iron phosphate, or a combination thereof. The lithium oxide may include, for example, an iron oxide, a vanadium oxide, or a combination thereof.

The sulfide cathode active material may include, for example, nickel sulfide, copper sulfide, Li₂S, a Li₂S-containing composite, or a combination thereof.

The oxide-based cathode active material may include, for example, one or more selected from composite oxides of lithium with a metal selected from cobalt, manganese, nickel, and a combination thereof. For example, the lithium-containing oxide-based cathode active material may include a compound represented by any one of the following formulas: LiₐA_{1-b}B'_{b}D₂ (in the formula, 0.90≤a≤1 and 0≤b≤0.5); LiₐE_{1-b}B'_{b}O_{2-c}D_{c} (in the formula, 0.90≤a≤1, 0≤b≤0.5, 0≤c≤0.05); LiE_{2-b}B'_{b}O_{4-c}D_{c} (in the formula, 0≤b≤0.5 and 0≤c≤0.05); LiₐNi_{1-b-c}Co_{b}B'_{c}D_{α} (in the formula, 0.90≤a≤1, 0≤b≤0.5, 0≤c≤0.05, and 0<α≤2); LiₐNi_{1-b-c}Co_{b}B'_{c}O_{2-α}F'_{α} (in the formula, 0.90≤a≤1, 0≤b≤0.5, 0≤c≤0.05, and 0<α<2); LiₐNi_{1-b-c}Co_{b}B'_{c}O_{2-α}F'_{α} (in the formula, 0.90≤a≤1, 0≤b≤0.5, 0≤c≤0.05, and 0<α<2); LiₐNi_{1-b-c}Mn_{b}B'_{c}D_{α} (in the formula, 0.90≤a≤1, 0≤b≤0.5, 0≤c≤0.05, and 0<α≤2); LiₐNi_{1-b-c}Mn_{b}B'_{c}O_{2-α}F'_{α} (in the formula, 0.90≤a≤1, 0≤b≤0.5, 0≤c≤0.05, and 0<α<2); LiₐNi_{1-b-c}Mn_{b}B'_{c}O_{2-α}F'_{α} (in the formula, 0.90≤a≤1, 0≤b ≤0.5, 0≤c≤0.05, and 0<α<2); LiₐNi_{b}E_{c}G_{d}O₂ (in the formula, 0.90≤a≤1, 0≤b≤0.9, 0≤c≤0.5, and 0.001≤d≤0.1); LiₐNi_{b}Co_{c}Mn_{d}GₑO₂ (in the formula, 0.90≤a≤1, 0≤b≤0.9, 0≤c≤0.5, 0≤d ≤0.5, and 0.001≤e≤0.1); LiₐNiG_{b}O₂ (in the formula, 0.90≤a≤1, 0.001≤b≤0.1); LiₐCoG_{b}O₂ (in the formula, 0.90≤a≤1 and 0.001≤b≤0.1); LiₐMnG_{b}O₂ (in the formula, 0.90≤a≤1 and 0.001≤b≤0.1); LiₐMn₂G_{b}O₄ (in the formula, 0.90≤a≤1 and 0.001≤b≤0.1); LiV₂O₅; LiI'O₂; LiNiVO₄; Li_{(3-f)}J₂(PO₄)₃ (0≤f≤2); Li_{(3-f)}Fe₂(PO₄)₃ (0≤f≤2); and LiFePO₄.

In the formulas representing the aforementioned compounds, A may be nickel (Ni), cobalt (Co), manganese (Mn), or a combination thereof; B' may be aluminum (Al), Ni, Co, Mn, chromium (Cr), iron (Fe), magnesium (Mg), strontium (Sr), vanadium (V), a rare earth element, or a combination thereof; D' may be oxygen (O), fluorine (F), sulfur (S), phosphorus (P), or a combination thereof; E may be Co, Mn, or a combination thereof; F' may be F, S, P, or a combination thereof; G may be Al, Cr, Mn, Fe, Mg, lanthanum (La), cerium (Ce), Sr, V, or a combination thereof; Q may be titanium (Ti), molybdenum (Mo), Mn, or a combination thereof; I' may be Cr, V, Fe, Sc, yttrium (Y), or a combination thereof; and J may be V, Cr, Mn, Co, Ni, copper (Cu), or a combination thereof. A compound having a coating layer added on a surface of the above compound may also be used. Furthermore, a mixture of the above compound with a compound having a coating layer added thereon may also be used. The coating layer added on the surface of the aforementioned compound may include, for example, compounds of a coating element, such as oxides and hydroxides of the coating element, oxyhydroxides of the coating element, oxycarbonates of the coating element, and hydroxycarbonates of the coating element. A compound forming this coating layer may be amorphous or crystalline. The coating element included in the coating layer may be Mg, Al, Co, K, Na, Ca, Si, Ti, V, Sn, Ge, Ga, B, As, Zr, or a mixture thereof. The method of forming the coating layer may be selected within a range that does not adversely affect physical properties of a cathode active material. Examples of a coating method may include spray coating, dip coating, and the like. Specific coating methods are well known to those of ordinary skill in the art and therefore, detailed descriptions thereof will be omitted here.

The oxide-based cathode active material may include, for example, a lithium transition metal oxide represented by Formulas 2 to 9 below:

Formula 2 LiₐNiₓCo_{y}M_{z}O_{2-b}A_{b}

In Formula 2, 1.0≤a≤1.2, 0≤b≤0.2, 0.8≤x<1, 0≤y≤0.3, 0<z≤0.3, and x+y+z=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A may be F, S, Cl, Br, or a combination thereof.

Formula 3 LiNiₓCo_{y}Mn_{z}O₂

Formula 4 LiNiₓCo_{y}Al_{z}O₂

In Formulas 3 and 4, 0.8≤x≤0.95, 0≤y≤0.2, 0<z≤0.2, and x+y+z=1,

Formula 5 LiNiₓCo_{y}Mn_{z}Al_{w}O₂

In Formula 5, 0.8≤x≤0.95, 0≤y≤0.2, 0<z≤0.2, 0<w≤0.2, and x+y+z+w=1,

Formula 6 LiₐCoₓM_{y}O_{2-b}A_{b}

In Formula 6, 1.0≤a≤1.2, 0≤b≤0.2, 0.9≤x≤1, 0≤y≤0.1, and x+y=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A may be F, S, Cl, Br, or a combination thereof.

Formula 7 LiₐNiₓMn_{y}M'_{z}O_{2-b}A_{b}

In Formula 7, 1.0≤a≤1.2, 0≤b≤0.2, 0<x≤0.3, 0.5≤y<1, 0<z≤0.3, and x+y+z=1, M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A may be F, S, Cl, Br, or a combination thereof.

Formula 8 LiₐM1ₓM2_{y}PO_{4-b}X_{b}

In Formula 8, 0.90≤a≤1.1, 0≤x≤0.9, 0≤y≤0.5, 0.9<x+y<1.1, and 0≤b≤2, M1 may be chromium (Cr), manganese (Mn), iron (Fe), cobalt (Co), nickel (Ni), copper (Cu), and zirconium (Zr), or a combination thereof, M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X may be O, F, S, P, or a combination thereof.

Formula 9 LiₐM3_{z}PO₄

In Formula 9, 0.90≤a≤1.1 and 0.9≤z≤1.1, and M3 may be chromium (Cr), manganese (Mn), iron (Fe), cobalt (Co), nickel (Ni), copper (Cu), zirconium (Zr) or a combination thereof.

The oxide-based cathode active material may be covered by a cover layer. The cover layer may be any material known as a cover layer of a cathode active material in an all-solid secondary battery in the art. The coating layer may be, for example, Li₂O-ZrO₂ (LZO) or the like.

A size of the oxide-based cathode active material may be, for example, about 0.1 µm to about 30 µm, about 0.5 µm to about 20 µm, or about 1 µm to about 15 µm. The oxide-based cathode active material may be, for example, single-crystal particles or polycrystal particles.

The sulfide cathode active materials may include, for example, a Li₂S-containing composite. The Li₂S-containing composite may include, for example, a composite of Li₂S and carbon, a composite of Li₂S, carbon, and a solid electrolyte, a composite of Li₂S and a solid electrolyte, a composite of Li₂S and a lithium salt, a composite of Li₂S, a lithium salt, and carbon, a composite of Li₂S and a metal carbide, a composite of Li₂S, carbon, and a metal carbide, a composite of Li₂S and a metal nitride, a composite of Li₂S, carbon, and a metal nitride, or a combination thereof.

The composite of Li₂S and carbon may include a carbon. The carbon may be, for example, any carbon-containing material available as a conductive material in the art. The carbon may be, for example, crystalline carbon, amorphous carbon, or a combination thereof. The carbon may be, for example, a fired product of a carbon precursor. The carbon may be, for example, a carbon nanostructure. Examples of the carbon nanostructure may include a one-dimensional carbon nanostructure, a two-dimensional carbon nanostructure, a three-dimensional carbon nanostructure, or a combination thereof. The carbon nanostructure may include, for example, carbon nanotubes, carbon nanofibers, carbon nanobelts, carbon nanorods, graphene, graphene oxide (GO), reduced graphene oxide (rGO), graphene balls (GB), or a combination thereof. The carbon may be, for example, porous carbon or non-porous carbon. The porous carbon may contain, for example, a periodic and regular two-dimensional or three-dimensional pore. Examples of the porous carbon may include carbon black such as Ketjen black, acetylene black, Denka black, thermal black, and channel black; and graphite, activated carbon, or a combination thereof. The form of the carbon may be a particulate form, a sheet form, a fibrous form, and the like, but without being limited thereto, any material available as carbon in the art may be utilized. The composite of Li₂S and carbon may be prepared by methods including, but not limited to a dry method, a wet method, or a combination thereof. Further, methods available in the art for preparing a composite of Li₂S and carbon include milling, heat treatment, deposition, and the like, but without being limited to the aforementioned methods, any method available in the art may be utilized.

The composite of Li₂S, carbon, and solid electrolyte may include a carbon and a solid electrolyte. For details of the carbon, refer to the composite of Li₂S and carbon described above. The solid electrolyte may be, for example, a formless solid electrolyte and may be any material available as an ionically conductive material in the art. The solid electrolyte may be, for example, an inorganic solid electrolyte. The solid electrolyte may be, for example, a crystalline solid electrolyte, an amorphous solid electrolyte, or a combination thereof. The solid electrolyte may be, for example, a sulfide solid electrolyte, an oxide-based solid electrolyte, or a combination thereof. The sulfide solid electrolyte may contain, for example, Li, S, and P, and may optionally further contain a halogen element. The sulfide solid electrolyte may be selected from sulfide solid electrolytes that are used in a solid electrolyte layer. For details of the sulfide solid electrolyte and the oxide-based solid electrolyte, refer to the aforementioned sulfide solid electrolyte and oxide-based solid electrolyte of the solid electrolyte layer.

The composite of Li₂S and solid electrolyte may include a solid electrolyte. For details of the solid electrolyte, refer to the composite of Li₂S, carbon, and solid electrolyte above.

A composite of Li₂S and a lithium salt may include a lithium salt compound. The lithium salt compound does not contain sulfur (S) atoms, for example. For example, the lithium salt compound may be a binary compound composed of lithium and one element selected from Groups 13 to 17 of the Periodic Table of the Elements and hydrogen (H). The binary compound may include, for example, one or more selected from LiF, LiCl, LiBr, Lil, LiH, Li₂S, Li₂O, Li₂Se, Li₂Te, Li₃N, Li₃P, Li₃As, Li₃Sb, LiI₃, and Li₃B. For example, the lithium salt compound may be a ternary compound composed of lithium and two or more elements selected from Groups 13 to 17 of the Periodic Table of the Elements. The ternary compound may include, for example, one or more selected from Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, and Li₃BN₂. In some embodiment, the lithium salt compound may be at least one lithium halide compound selected from among LiF, LiCl, LiBr, and Lil. The composite of Li₂S and solid electrolyte may include a solid electrolyte. For details of the solid electrolyte, refer to the solid electrolyte used in the composite of Li₂S, carbon, and a solid electrolyte described above. The composite of Li₂S and lithium salt may include, for example, a composite of Li₂S with one or more lithium salts selected from LiF, LiCl, LiBr, Lil, LiH, Li₂S, Li₂O, Li₂Se, Li₂Te, Li₃N, Li₃P, Li₃As, Li₃Sb, LiI₃, and LiB₃.

A composite of Li₂S, a lithium salt, and carbon may include a lithium salt compound and carbon. For details of the carbon, refer to the composite of Li₂S and carbon described above. For details of the lithium salt, refer to the composite of Li₂S and the lithium salt described above.

The composite of Li₂S and metal carbide may include a metal carbide. The metal carbide may be, for example, a two-dimensional metal carbide. A two-dimensional metal carbide may be, for example, MXene. The two-dimensional metal carbide may be represented by, for example, Mₙ₊₁CₙTₓ (wherein M is a transition metal, T is a terminal group, T is O, OH and/or F, n = 1, 2, or 3, and x is the number of terminal groups). The two-dimensional metal carbide may be, for example, Ti₂CTₓ, (Ti_{0.5}, Nb_{0.5})₂CTₓ, Nb₂CTₓ, V₂CTₓ, Ti₃C₂Tₓ, (V_{0.5}, Cr_{0.5})₃C₂Tₓ, Ti₃C₂Tₓ, Ta₄C₃Tₓ, Nb₄C₃Tₓ, or a combination thereof. The surface of the two-dimensional metal carbide may be terminated by O, OH, and/or F.

The composite of Li₂S, carbon, and a metal carbide may include carbon and a metal carbide. For details of the carbon, refer to the composite of Li₂S and carbon described above. For details of the metal carbide, refer to the composite of Li₂S and a metal carbide described above.

The composite of Li₂S and a metal nitride may include a metal nitride. The metal nitride may be, for example, a two-dimensional metal nitride. The two-dimensional metal nitride may be represented by, for example, Mₙ₊₁NₙTₓ (wherein M is a transition metal, T is a terminal group, T is O, OH and/or F, n = 1, 2, or 3, and x is the number of terminal groups). The surface of the two-dimensional metal nitride may be terminated by O, OH, and/or F.

The composite of Li₂S, carbon, and a metal nitride may include carbon and a metal nitride. For details of the carbon, refer to the composite of Li₂S and carbon described above. For details of the metal carbide, refer to the composite of Li₂S and a metal nitride described above.

The Li₂S-containing composite may further include, for example, a sulfide solid electrolyte.

The size of the sulfide cathode active material may be, for example, about 0.1 µm to about 50 µm, about 0.5 µm to about 30 µm, about 0.5 µm to about 20 µm, or about 1 µm to about 10 µm. The size of Li₂S may be, for example, about 1 nm to about 10 µm, about 10 nm to about 5 µm, about 10 nm to about 3 µm, or about 10 nm to about 1 µm. The size of the Li₂S-containing composite may be, for example, about 0.1 µm to about 50 µm, about 0.5 µm to about 30 µm, about 0.5 µm to about 20 µm, or about 1 µm to about 10 µm.

The form of the cathode active material may have a particulate form, such as a perfect sphere shape, an oval sphere shape, and the like. The particle diameter of the cathode active material is not limited and may be within a range that is applicable to a cathode active material of a conventional all-solid secondary battery.

The cathode active material may be covered by a cover layer. The cover layer may be any material known as a cover layer of a cathode active material in an all-solid secondary battery in the art. The cover layer may be, for example, Li₂O-ZrO₂ or the like.

If the cathode active material contains nickel (Ni) as a ternary lithium transition metal oxide such as NCA and NCM, for example, the capacity density of the all-solid secondary battery 1 increases, which makes it possible to reduce metal elution from the cathode active material while in a charged state. As a result, the cycling performance of the all-solid secondary battery may improve.

The form of the cathode active material may have a particulate form, such as a perfect sphere, an oval sphere, and the like. The particle diameter of the cathode active material is not limited and may be within a range that is applicable to a cathode active material of a conventional all-solid secondary battery. The content of the cathode active material in the cathode 10 is not limited and may be within a range applicable to a cathode of a conventional all-solid secondary battery.

Other than the aforementioned cathode active materials and solid electrolytes, the cathode 10 may further include, for example, an additive such as a conductive material, a binder, a filler, a dispersant, and an ion-conducting aid. Examples of the conductive material may include graphite, carbon black, acetylene black, Ketjen black, carbon fibers, metal powder, and the like. The binder may be, for example, styrene butadiene rubber (SBR), polytetrafluoroethylene, polyvinylidene fluoride, polyethylene, and the like. A coating agent, a dispersant, an ion-conducting aid, etc. that may be combined with the cathode 10 may be any known material in the art for use in electrodes of solid secondary batteries.

An all-solid secondary battery may be prepared through a process in which the solid electrolyte layer 30 is laminated on the cathode 10, and the anode 20 is laminated on the solid electrolyte layer 30.

According to another embodiment, the solid electrolyte layer 30 may be prepared by having a solid electrolyte-forming composition coated and dried on a separate support, and separating the solid electrolyte film from the support; or may be prepared in a sheet form that includes a support. Non-limiting examples of the support may include a polyethylene terephthalate film, polyethylene non-woven fabric, and the like.

According to another embodiment, the solid electrolyte layer 30 may be formed by having the solid electrolyte-forming composition coated and dried, or transferred on top of the cathode 10. The solid electrolyte layer 30 may be in a sheet form.

Subsequently, the cathode, the solid electrolyte layer and the anode may be packaged with a packing material and then pressed, to produce an all-solid battery. The pressing may be carried out by roll press, hot press, warm isostatic press, or the like. In particular, the warm isostatic press may be performed at a temperature of about 85 °C, at a pressure of about 490 MPa, for about 30 minutes.

Using a roll press or hot press for the press may enable massive production and allow close interfaces to be formed during a compression process of electrode layers and solid electrolyte layers.

### Preparation of Anode

Components constituting the anode active material layer 22, including an anode active material, a conductive material, a binder, a solid electrolyte, and the like, may be added to a polar solvent or a non-polar solvent to prepare slurry. The prepared slurry may be applied and dried on the anode current collector 21 to prepare a first laminate. Then, the dried first laminate may be pressed to prepare the anode 20. The pressing may be carried out by a roll press, a flat press, or the like. However, without being limited to the aforementioned examples, any press available in the art may be utilized. The pressing process may be omitted.

### Preparation of Cathode

Components constituting the cathode active material layer 12, including a bimodal cathode active material, a conductive material, a binder, a solid electrolyte, and the like, may be added to a non-polar solvent to prepare slurry. The prepared slurry may be applied and dried on the cathode current collector 11. The obtained laminate may be pressed to prepare the cathode 10. The pressing may be carried out by a roll press, a flat press, a press using isostatic pressing, or the like. However, without being limited to the aforementioned examples, any press available in the art may be utilized. The pressing process may be omitted. Alternatively, the cathode 10 may be prepared by having a mixture of materials constituting the cathode active material layer 12 consolidated in a pellet form, or stretched (formed) into a sheet form. If the cathode 10 is prepared by this method, the cathode current collector 11 may be omitted.

The cathode current collector may utilize, for example, a plate, a foil, or the like, formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The cathode current collector may be omitted. The cathode current collector may have a thickness of, for example, about 1 µm to about 100 µm, about 1 µm to about 50 µm, about 5 µm to about 25 µm, or about 10 µm to about 20 µm.

The cathode current collector may include, for example, a base film, and a metal layer disposed on one side or both sides of the base film. For example, the base film may include a polymer. For example, the polymer may include polyethylene terephthalate (PET), polyethylene (PE), polypropylene (PP), polybutylene terephthalate (PBT), polyimide (PI), or a combination thereof. For example, the metal layer may include indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. With the cathode current collector having the aforementioned structure, the weight of the electrode may be reduced, and as a result, the energy density of a lithium battery may improve.

### Preparation of Solid Electrolyte

The solid electrolyte layer 30 may be prepared, for example, by using a solid electrolyte made of a sulfide solid electrolyte material. The solid electrolyte layer 30 may be prepared, for example, by a process through which a sulfide solid electrolyte, a solvent, and a binder, are mixed, and the mixture is applied, dried and then pressed to prepare the solid electrolyte layer 30. Alternatively, the solid electrolyte layer 30 may be prepared by deposition of a sulfide solid electrolyte obtained by the aforementioned sulfide solid electrolyte preparation method by a known film-forming method, such as aerosol deposition, cold spraying, sputtering, and the like. Alternatively, the solid electrolyte layer 30 may be prepared by pressing a simple substance of solid electrolyte particles.

### Preparation of All-Solid Secondary Battery

A method of preparing an all-solid secondary battery according to an embodiment may include: providing an anode; preparing a solid electrolyte layer; producing an anode-solid electrolyte subassembly by laminating the solid electrolyte layer on the anode; and disposing a cathode on a solid electrolyte of the anode-solid electrolyte subassembly, wherein the step of providing the anode may include disposing a second anode active material layer on the anode current collector; and disposing a first anode active material layer on the second anode active material layer.

The first anode active material layer may include a first anode active material containing: a mixture of i) a first carbon anode active material and ii) one or more first elements selected from metal and metalloids; a composite of i) a first carbon anode active material and ii) one or more first elements selected from metals and metalloids; or a combination thereof. The second anode active material layer may include a second anode active material containing: a mixture of i) a second carbon anode active material and ii) one or more second elements selected from a metal and metalloids; a composite of i) a second carbon-based anode active material and ii) one or more second elements selected from metals and metalloids; or a combination thereof.

The amount of first elements in the first anode active material layer may be more than the amount of second elements in the second anode active material layer, and the amount of the first elements may be about 25 wt% to about 80 wt% with respect to the total weight of the first anode active materials included in the anode active material layer.

The aforementioned cathode, solid electrolyte, and anode may be positioned, and subjected to pressing when manufacturing an all-solid secondary battery.

The pressing may be carried out at a temperature from room temperature to 90 °C or less, for example, in a range of about 20 °C to about 90 °C. Alternatively, the pressing may be carried out at a temperature as high as 100 °C or more. The duration for pressing may be, for example, 30 minutes or less, 20 minutes or less, 15 minutes or less, or 10 minutes or less. The duration for pressing may be, for example, about 1 ms to about 30 minutes, about 1 ms to about 20 minutes, about 1 ms to about 15 minutes, or about 1 ms to about 10 minutes. The pressing method may use, for example, an isostatic press, a roll press, a flat press, and the like; but without being limited thereto, may be any press available in the art. The pressure applied during pressing may be, for example, 500 MPa or less, 450 MPa or less, 350 MPa or less, 300 MPa or less, 200 MPa or less, 150 MPa or less, or 100 MPa or less. The pressure applied during pressing may be, for example, about 50 MPa to about 500 MPa, about 50 MPa to about 300 MPa, about 50 MPa to about 150 MPa, or about 50 MPa to about 100 MPa. By this pressing process, solid electrolyte powder, for example, may be sintered to form a single solid electrolyte layer.

The aforementioned composition and manufacturing method of an all-solid secondary battery are one example of embodiments, and as such, constitutive members and manufacturing steps, etc. may be subjected to suitable modifications.

Hereinbelow, the present disclosure will be described in greater detail in conjunction with Examples and Comparative Examples, but is not limited to the examples disclosed below.

### Preparation of Cathode Active Materials

Preparation Example 1: LiNi_{0.8}Co_{0.15}Al_{0.05}O₂ (NCA) (D50=14 µm) with aLi₂O-ZrO₂ coating A cathode active material having aLi₂O-ZrO₂ coating prepared by the following method was used.

Lithium methoxide, zirconium propoxide, ethanol, and ethyl acetoacetate were mixed to prepare a mixed solution, and the mixed solution was stirred and mixed for 30 minutes to prepare an alcohol solution of aLi₂O-ZrO₂ (a=1) (coating solution for aLi₂O-ZrO₂ coating). Here, the respective amounts of lithium methoxide and zirconium propoxide were each adjusted so that the amount of aLi₂O-ZrO₂ (a=1) coated on the surface of the cathode active material was 0.25 mol% with respect to 100 mol% of the cathode active material.

Then, the coating solution for aLi₂O-ZrO₂ coating was mixed with cathode active material LiNi_{0.8}Co_{0.15}Al_{0.05}O₂ (NCA)(D50=14 µm) powder, and the mixed solution was heated to about 40 °C under stirring, thereby evaporating and drying the solvents such as alcohol. Here, the mixed solution was agitated with ultrasonic waves.

Performing this process allows a precursor of aLi₂O-ZrO₂ to be supported on the particle surface of the cathode active material powder.

In addition, a precursor of aLi₂O-ZrO₂ (a=1) supported on the particle surface of the cathode active material was heat treated at about 350 °C for 1 hour under an oxygen atmosphere. During this heat treatment process, the precursor of aLi₂O-ZrO₂ (a=1) present on the surface of the cathode active material changed to aLi₂O-ZrO₂ (a=1). The amount of aLi₂O-ZrO₂ (LZO) was about 0.4 parts by weight with respect to 100 parts by weight of NCA.

Through the preparation process described above, LiNi_{0.8}Co_{0.15}Al_{0.05}O₂ (NCA)(D50=14 µm) having aLi₂O-ZrO₂ coating film was obtained. In aLi₂O-ZrO₂, a is 1.

### Preparation Example 2: LiNi_{0.8}Co_{0.15}Al_{0.05}O₂ (NCA) (D50=5 µm) with aLi₂O-ZrO₂ coating

LiNi_{0.8}Co_{0.15}Al_{0.05}O₂ (NCA) (D50=5 µm) having aLi₂O-ZrO₂ coating was prepared following the same process as Preparation Example 1, except that the cathode active material LiNi_{0.8}Co_{0.15}Al_{0.05}O₂ (NCA) (D50=5 µm) was used instead of LiNi_{0.8}Co_{0.15}Al_{0.05}O₂ (NCA) (D50=14 µm).

### Preparation of Ag particles-supported CB

### Preparation Example 3: Preparation of Ag particles-supported carbon black (Ag 40 wt%)

CB was dispersed in 1.0 M sulfuric acid solution and stirred for 2 hours, followed by filtration and drying, to prepare acid-treated CB.

80 g of the acid-treated CB was introduced and stirred in a mixed solvent containing 1,500 g of distilled water, 1,500 g of ethanol, and 30 g of glycerol, and then AgNO₃ was introduced thereto and stirred to prepare a mixed solution. The amount of AgNO₃ was adjusted so that the amount of Ag in the silver particle-supported carbon black was 40 wt%. The respective amounts of the acid-treated CB and AgNOs were adjusted such that the amount of silver-containing particles included in the composite anode active material (Ag particles-supported carbon black) become 40 wt%. By introducing a reducing agent into the mixed solution, silver ions were reduced and supported on the CB. Sodium borohydride (NaBH₄) was used as the reducing agent. The CB supported with Ag-containing particles was filtered, washed, and dried to prepare a composite anode active material. It was confirmed by scanning electron microscopy and XPS that a plurality of Ag-containing particles were supported on CB particles. The Ag-containing particles were Ag particles, silver oxide (Ag₂O) particles, and composite particles of Ag and Ag₂O. The amount of Ag-containing particles included in the composite anode active material was 40 wt%. The average particle diameter of the Ag particles was 40 nm, and the average particle diameter of carbon black was 550 nm.

### Preparation Example 4: Preparation of Ag particle-supported carbon black (Ag 15 wt%)

Silver particles-supported CB was prepared following the same process as Preparation Example 3, except that the respective amounts of the acid-treated CB and AgNOs were adjusted such that the amount of silver-containing particles included in the composite anode active material (Ag particle-supported carbon black) become 15 wt%.

### Preparation of Anode-Solid Electrolyte Subassembly and All-Solid Secondary Battery Including the Same

### Example 1: Cathode/Solid Electrolyte (SE)/First AA (Ag 40 wt%-C)/Second AA (Ag 15 wt%-C)/Anode Current Collector (Ag 15 wt% (bottom)/C // Ag 40 wt% (top)/C)

Large-diameter cathode active material NCA (first cathode active material) (D50=14 µm) obtained from Preparation Example 1, small-diameter cathode active material NCA (second cathode active material) (D50=5 µm) obtained from Preparation Example 2, and solid electrolyte Li_{5.75}PS_{4.75}Cl_{1.25} (D50=3 µm) were mixed in a blender to prepare a mixture. The total weight of the large-diameter cathode active material NCA (first cathode active material) and small-diameter cathode active material NCA (second cathode active material) was 6 g, and the amount of the solid electrolyte was 1.12 g. The mixing weight ratio of the large-diameter cathode active material NCA (D50=14 µm) obtained from Preparation Example 1, and small-diameter cathode active material NCA (D50=5 µm) obtained from Preparation Example 2 was 4:1.

The mixture was stirred, and the conductive material carbon nanotubes (CNTs), the binder polytetrafluoroethylene (PTFE), and the solid electrolyte Li_{5.75}PS_{4.75}Cl_{1.25} were added to the mixture and stirred. The solvent xylene was added to the mixed particles thus producing a dough-like cathode composition, and the cathode composition was stretched to a thickness of about 150 µm by a dry kneading method to thereby preparing a cathode sheet. Subsequently, the cathode sheet was dried under vacuum at 45 °C for 2 hours.

The mixing weight ratio of cathode active material, conductive material, binder, and solid electrolyte was 85:0.4:0.6:14. A compressed cathode was prepared by performing a warm isostatic press process in which a cathode sheet was compressed to a 18 µm-thick aluminum foil of a cathode current collector and placed in a batch-type oil chamber, and then subjected to application of a pressure of 490 MPa.

An SUS foil (thickness: 10 µm) was prepared as an anode current collector. Silver particles (average particle diameter: 60 nm) and carbon black powder (average particle diameter: 35 nm) as an anode active material were mixed in a weight ratio of 15:85 to prepare a mixture of carbon black and silver. In a container, the silver (average particle diameter: 60 nm) and carbon black powder (average particle diameter: 35 nm) were added together with polyvinylidene fluoride binder (# 9300, Kureha) to N-methyl pyrrolidone (NMP) and stirred, to prepare a second anode active material layer-forming composition. The amount of the polyvinylidene fluoride binder was 7 wt% based on the total weight of the second anode active material layer-forming composition. The second anode active material layer-forming composition was coated on the SUS foil by a blade coater, and dried in the air at 80 °C for 20 minutes, and then vacuum-dried at 100 °C for 12 hours to thereby forming a second anode active material layer (Second AA).

Further, silver particles (average particle diameter: 60 nm) and carbon black powder (average particle diameter: 35 nm) as an anode active material were mixed in a weight ratio of 40:60 to prepare a mixture of carbon black and silver particles. In a container, the silver (average particle diameter: 60 nm) and carbon black powder (average particle diameter: 35 nm) were added together with polyvinylidene fluoride binder (# 9300, Kureha)to N-methyl pyrrolidone (NMP) and stirred, to prepare a first anode active material layer-forming composition. The amount of the polyvinylidene fluoride binder was 7 wt% based on the total weight of the first anode active material layer-forming composition. The first anode active material layer-forming composition was coated on the second anode active material layer which was formed on the SUS foil previously by a blade coater, and dried in the air at 80 °C for 20 minutes, and then vacuum-dried at 100 °C for 12 hours to thereby forming a first anode active material layer (First AA) and prepare an anode.

The thickness of the first anode active material layer was about 5 µm, and the thickness of the second anode active material layer was 5 µm. The total thickness of the anode active material layer containing the first anode active material layer and the second anode active material layer was about 10 µm.

The solid electrolyte Li_{5.75}PS_{4.75}Cl_{1.25} (D50=3 µm) was mixed with a binder, acrylic resin (A334 manufactured by Xeon) in a weight ratio of 98.5:1.5 to prepare a mixture. The mixture was then combined with the solvent isobutyl isobutyrate (IBIB) and stirred to prepare a solid electrolyte-forming composition.

The solid electrolyte-forming composition was coated on a polyethylene terephthalate (PET) film, which is a release film,, and the resulting product was dried in the air in a dry room at 25 °C for 12 hours and then vacuum-dried at 70 °C for 2 hours, to form a sheet-shaped solid electrolyte on the PET film. Then, the PET film was separated from and removed to prepare a solid electrolyte.

The cathode, solid electrolyte, and anode obtained through the above processes were sequentially stacked, and the resulting stack was subjected to warm isostatic pressing at 85 °C with a pressure of 500 MPa, for about 30 minutes, to prepare an all-solid secondary battery. In the all-solid battery, the thickness of the solid electrolyte after pressing was 45 µm.

### Example 2: Cathode/Solid Electrolyte (SE)/First AA (Ag 40 wt%-C)/Second AA (Ag 25 wt%-C)/Anode Current Collector (Ag 25 wt% (bottom)/C // Ag 40 wt% (top)/C)

An all-solid secondary battery was prepared following the same process as Example 1, except that the mixing weight ratio of silver to carbon black powder in the second anode active material layer-forming composition was changed to 25:75 from 15:85.

### Example 3: Ag 25 wt% (bottom)/C // Zn 40 wt% (top)/C

An all-solid secondary battery was prepared following the same process as Example 2, except that zinc was used instead of silver when preparing the first anode active material layer-forming composition, and the average particle diameter of the zinc particles was about 100 nm.

### Example 4

An all-solid secondary battery was prepared following the same process as Example 1, except that when forming the first anode active material layer, the silver particles-supported carbon black prepared according to Preparation Example 3 was used instead of the mixture of silver and carbon black.

### Example 5

An all-solid secondary battery was prepared following the same process as Example 1, except that when forming the second anode active material layer, the silver particles-supported carbon black prepared according to Preparation Example 4 was used instead of the mixture of silver and carbon black.

### Example 6: Ag 10 wt% (bottom)/C // Ag 25 wt% (top)/C

An all-solid secondary battery was prepared following the same process as Example 1, except that the silver content of each of the first anode active material layer and the second anode active material layer was modified as shown in Table 1.

### Example 7: Ag 10 wt% (bottom)/C // Ag 40 wt% (top)/C

An all-solid secondary battery was prepared following the same process as Example 1, except that the silver content of each of the first anode active material layer and the second anode active material layer was modified as shown in Table 1.

**Table 1**

| Item | | First anode active material layer (top) | Second anode active material layer (bottom) | Difference in silver content* |
|---|---|---|---|---|
| Example 6 | Ag 10 wt% (bottom)/C // Ag 25 wt% (top)/C | Ag 25 wt% | Ag 10 wt% | 15 wt% |
| Example 7 | Ag 10 wt% (bottom)/C // Ag 40 wt% (top)/C | Ag 40 wt% | Ag 10 wt% | 30 wt% |

| | | | | |
|---|---|---|---|---|
| * Silver content difference=(difference between the silver content of the first anode active material layer and the silver content of the second anode active material layer) | | | | |

### Example 8

An all-solid secondary battery was prepared following the same process as Example 1, except that the thickness of the first anode active material layer was about 3.5 µm, and the thickness of the second anode active material layer was changed to 6.5 µm. The total thickness of the anode active material layer containing the first anode active material layer and the second anode active material layer was about 10 µm.

### Comparative Example 1: Ag 15 wt%/C

An all-solid secondary battery was prepared following the same process as Example 1, except that the anode was formed through the following process.

An SUS foil (thickness: 10 µm) was prepared as an anode current collector. Silver particles (average particle diameter: 60 nm) and carbon black powder (average particle diameter: 35 nm) as an anode active material were mixed in a weight ratio of 15:85 to prepare a mixture of carbon black and silver. In a container, the silver (average particle diameter: 60 nm) and carbon black powder (average particle diameter: 35 nm) were added together with polyvinylidene fluoride binder (# 9300, Kureha) to N-methyl pyrrolidone (NMP) and stirred, to prepare an anode active material layer-forming composition. The amount of the polyvinylidene fluoride binder was 7 wt% based on the total weight of the anode active material layer-forming composition. The anode active material layer-forming composition was coated on the SUS foil by a blade coater, and dried in the air at 80 °C for 20 minutes, and then vacuum-dried at 100 °C for 12 hours to thereby forming an anode active material layer and prepare an anode including the anode active material layer.

The thickness of the anode active material layer was about 10 µm.

### Comparative Example 2: Ag 25 wt%/ C

An all-solid secondary battery was prepared following the same process as Comparative Example 1, except that when preparing the mixture of carbon black and silver, silver particles (average particle diameter: 60 nm) and carbon black powder (average particle diameter: 35 nm) were mixed in a weight ratio of 25:75 as an anode active material to prepare an anode.

### Comparative Example 3: Ag 25 wt% (bottom)/C // Ag 15 wt% (top)/C

An all-solid secondary battery was prepared following the same process as Example 1, except that the anode was prepared by the following process.

An SUS foil (thickness: 10 µm) was prepared as an anode current collector. Silver particles (average particle diameter: 60 nm) and carbon black powder (average particle diameter: 35 nm) as an anode active material were mixed in a weight ratio of 25:75 to prepare a mixture of carbon black and silver. In a container, the silver (average particle diameter: 60 nm) and carbon black powder (average particle diameter: 35 nm) were added together with polyvinylidene fluoride binder (# 9300, Kureha) to N-methyl pyrrolidone (NMP) and stirred, to prepare a second anode active material layer-forming composition. The amount of the polyvinylidene fluoride binder was 7 wt% based on the total weight of the second anode active material layer-forming composition. The second anode active material layer-forming composition was coated on the SUS foil by a blade coater, and dried in the air at 80 °C for 20 minutes, and then vacuum-dried at 100 °C for 12 hours to thereby forming a second anode active material layer (Second AA).

Further, silver particles (average particle diameter: 60 nm) and carbon black powder (average particle diameter: 35 nm) as an anode active material were mixed in a weight ratio of 15:85 to prepare a mixture of carbon black and silver particles. In a container, the silver (average particle diameter: 60 nm) and carbon black powder (average particle diameter: 35 nm) were added together with polyvinylidene fluoride binder (# 9300, Kureha) to N-methyl pyrrolidone (NMP) and stirred, to prepare a first anode active material layer-forming composition. The amount of the polyvinylidene fluoride binder was 7 wt% based on the total weight of the first anode active material layer-forming composition. The first anode active material layer-forming composition was coated on the second anode active material layer, which was formed on the SUS foil previously by a blade coater, and dried in the air at 80 °C for 20 minutes, and then vacuum-dried at 100 °C for 12 hours to thereby forming a first anode active material layer (First AA) and prepare an anode.

The thickness of the first anode active material layer was about 5 µm, and the thickness of the second anode active material layer was 5 µm. The total thickness of the anode active material layer containing the first anode active material layer and the second anode active material layer was about 10 µm.

### Comparative Example 4: Ag 40 wt%/ C

An all-solid secondary battery was prepared following the same process as Comparative Example 1, except that when preparing the mixture of carbon black and silver, silver particles (average particle diameter: 60 nm) and carbon black powder (average particle diameter: 35 nm) were mixed in a weight ratio of 40:60 as an anode active material to prepare an anode.

### Comparative Example 5: Ag 40 wt% (bottom)/C // Ag 15 wt% (top)/C

An all-solid secondary battery was prepared following the same process as Example 1, except that the anode was prepared by the following process.

An SUS foil (thickness: 10 µm) was prepared as an anode current collector. Silver particles (average particle diameter: 60 nm) and carbon black powder (average particle diameter: 35 nm) as an anode active material were mixed in a weight ratio of 40:60 to prepare a mixture of carbon black and silver. In a container, the silver (average particle diameter: 60 nm) and carbon black powder (average particle diameter: 35 nm) were added together with polyvinylidene fluoride binder (# 9300, Kureha) with respect to the anode to N-methyl pyrrolidone (NMP) and stirred, to prepare a second anode active material layer-forming composition. The amount of the polyvinylidene fluoride binder was 7 wt% based on the total weight of the second anode active material layer-forming composition, The second anode active material layer-forming composition was coated on the SUS foil by a blade coater, and dried in the air at 80 °C for 20 minutes, and then vacuum-dried at 100 °C for 12 hours to form a second anode active material layer (Second AA).

Further, silver particles (average particle diameter: 60 nm) and carbon black powder (average particle diameter: 35 nm) as an anode active material were mixed in a weight ratio of 15:85 to prepare a mixture of carbon black and silver particles. In a container, the silver (average particle diameter: 60 nm) and carbon black powder (average particle diameter: 35 nm) were added together with polyvinylidene fluoride binder (# 9300, Kureha) to N-methyl pyrrolidone (NMP) and stirred, to prepare a first anode active material layer-forming composition. The amount of the polyvinylidene fluoride binder was 7 wt% based on the total weight of the anode active material layer-forming composition. The first anode active material layer-forming composition was coated on the second anode active material layer, which was formed on the SUS foil previously by a blade coater, and dried in the air at 80 °C for 20 minutes, and then vacuum-dried at 100 °C for 12 hours to form a first anode active material layer (First AA) and prepare an anode.

The thickness of the first anode active material layer was about 5 µm, and the thickness of the second anode active material layer was 5 µm. The total thickness of the anode active material layer containing the first anode active material layer and the second anode active material layer was about 10 µm.

### Comparative Example 6: Ag 40 wt% (bottom)/C // Ag 25 wt% (top)/C

An all-solid secondary battery was prepared following the same process as Example 1, except that the anode was prepared by the following process.

An SUS foil (thickness: 10 µm) was prepared as an anode current collector. Silver particles (average particle diameter: 60 nm) and carbon black powder (average particle diameter: 35 nm) as an anode active material were mixed in a weight ratio of 40:60 to prepare a mixture of carbon black and silver. In a container, the silver (average particle diameter: 60 nm) and carbon black powder (average particle diameter: 35 nm) were added together with polyvinylidene fluoride binder (# 9300, Kureha) to N-methyl pyrrolidone (NMP) and stirred, to prepare a second anode active material layer-forming composition. The amount of polyvinylidene fluoride binder was 7 wt% based on the total weight of the second anode active material layer-forming composition. The second anode active material layer-forming composition was coated on the SUS foil by a blade coater, and dried in the air at 80 °C for 20 minutes, and then vacuum-dried at 100 °C for 12 hours to form a second anode active material layer (Second AA).

Further, silver particles (average particle diameter: 60 nm) and carbon black powder (average particle diameter: 35 nm) as an anode active material were mixed in a weight ratio of 25:75 to prepare a mixture of carbon black and silver particles. In a container, the silver (average particle diameter: 60 nm) and carbon black powder (average particle diameter: 35 nm) were added together with polyvinylidene fluoride binder (# 9300, Kureha) to N-methyl pyrrolidone (NMP) and stirred, to prepare a first anode active material layer-forming composition. The amount of polyvinylidene fluoride binder was 7 wt% based on the total weight of the first anode active material layer-forming composition. The first anode active material layer-forming composition was coated on the second anode active material layer, which was formed on the SUS foil previously by a blade coater, and dried in the air at 80 °C for 20 minutes, and then vacuum-dried at 100 °C for 12 hours to thereby forming a first anode active material layer (First AA) and prepare an anode.

The thickness of the first anode active material layer was about 5 µm, and the thickness of the second anode active material layer was 5 µm. The total thickness of the anode active material layer containing the first anode active material layer and the second anode active material layer was about 10 µm.

### Comparative Example 7: Zn 40 wt%/ C

An all-solid secondary battery was prepared following the same process as Comparative Example 1, except that when preparing the mixture of carbon black and silver, zinc was used instead of silver, and zinc particles (average particle diameter: 100 nm) and carbon black powder (average particle diameter: 35 nm) were mixed in a weight ratio of 40:60 as an anode active material to prepare an anode.

### Evaluation Example 1: SEM-EDX Analysis

The all-solid secondary batteries prepared according to Example 1 and Comparative Examples 3 and 5 were each charged at a constant current of 0.1 C until the battery voltage reached 4.2 V. Subsequently, each battery was discharged with a constant current of 0.1 C until the battery voltage reached 2.5 V. After the formation, the cell was disassembled and subjected to cross-sectional SEM-EDX analysis to characterize the distribution of silver.

The all-solid secondary battery of Example 1 was subjected to EDX mapping to characterize the content of silver. As a result, it was found that the content of silver in a second region in a discharged state was higher than the content of silver in a first region. Here, the first region refers to a region up to 50 thickness% from a point of contact between the anode active material layer and the solid electrolyte, and the second region refers to the remaining region of the anode active material layer that excludes the first region, that is, a region up to 50 thickness% from a point of contact between the anode active material layer and the anode current collector. As used herein, the thickness% is relative to the total thickness of the anode active material layer.

After discharging, the silver concentration in the first region (top) at the solid electrolyte layer interface may be maintained at an appropriate concentration, while lithium diffusion and deposition resistance are reduced. After discharging, the silver content of the second region (bottom) was 32 wt%, and the silver content of the first region (top) was 23 wt%, and as such, the difference in silver content between the first region and the second region was 9 wt%. Here, the difference in silver content was evaluated by reconstructing an Ag-point region based on an EDX image, and comparing the difference in the number of silver particles

Meanwhile, it was found that the all-solid secondary battery prepared according to Comparative Example 3, after discharging, shows silver being more locally concentrated in the anode active material layer adjacent to the current collector. In this case, after discharging, the silver content of the second region (bottom) was 28 wt%, and the silver content of the first region (top) was 12 wt%, and hence the difference in silver content between the first region and the second region was 16 wt%. As such, for Comparative Example 3, the difference in silver content between the first region and the second region in the anode active material layer after discharging was significantly increased in comparison with Example 1.

In addition, it was found that in the all-solid secondary battery of Comparative Example 5, which has the opposite silver composition distribution from the anode active material layer of Example 1, silver was present predominantly in the interface area adjacent to the current collector of the anode active material layer.

In addition, the all-solid secondary batteries prepared according to Examples 4 and 5 after discharging were subjected to EDX mapping to characterize the silver content.

As a result, it was found that in the all-solid secondary batteries of Examples 4 and 5, silver was relatively more uniformly present in the anode active material layer in comparison to the all-solid secondary batteries of Examples 1 to 3.

### Evaluation Example 2: High-Rate Discharge Capacity and Average Discharge Voltage

The all-solid batteries prepared according to Examples 1 and 2 and Comparative Examples 1 to 6 were each evaluated through charge-discharge processes under 2.5 V - 4.25 V, 0.1 C cut-off CCCV (Constant Current Constant Voltage) at 45 °C.

Charge-discharge characteristics of the all-solid secondary batteries were evaluated by the following charge-discharge test. The charge-discharge test was performed with the all-solid secondary battery placed in a constant-temperature bath at 45 °C.

In the 1st cycle, the battery was charged at a constant current of 0.1 C until the battery voltage reached 4.2 V. Subsequently, the battery was discharged with a constant current of 0.1 C until the battery voltage reached 2.5 V. In the 2nd cycle, the battery was charged at a constant current of 0.33 C until the battery voltage reached 4.25 V. Subsequently, the battery was discharged with a constant current of 0.33 C until the battery voltage reached 2.5 V.

In the 3rd cycle, the battery was charged at a constant current of 1.0 C until the battery voltage reached 4.2 V. Subsequently, the battery was discharged with a constant current of 1.0 C until the battery voltage reached 2.5 V.

In each cycle, a rest period of 10 minutes was provided after charging and discharging.

Alternatively, in the 3^{rd} cycle, the charging and discharging were performed by charging and discharging at a constant current of 2.0 C, instead of charging and discharging at a constant current of 1.0 C.

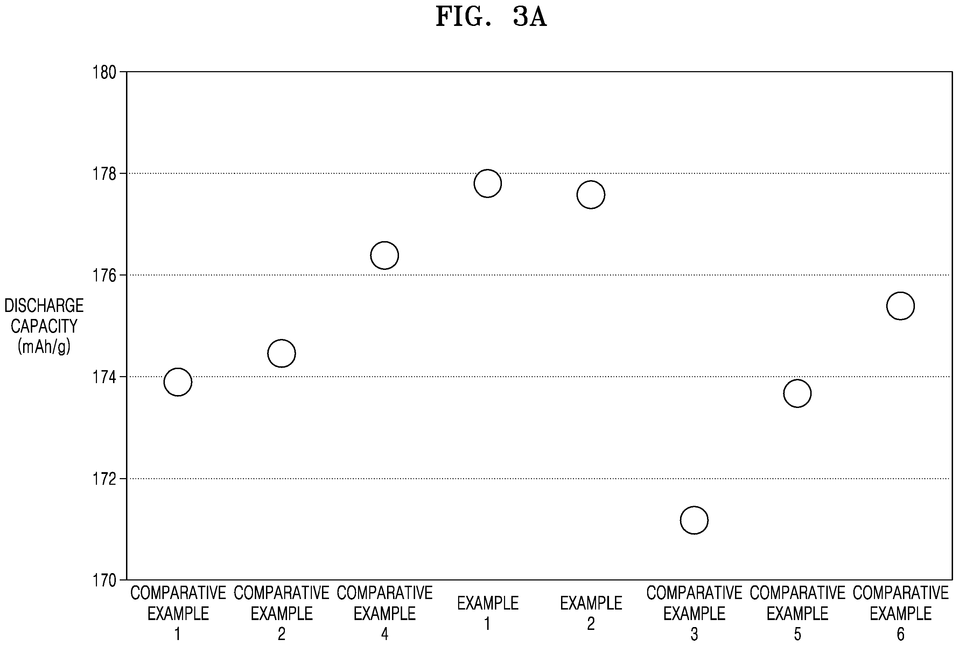

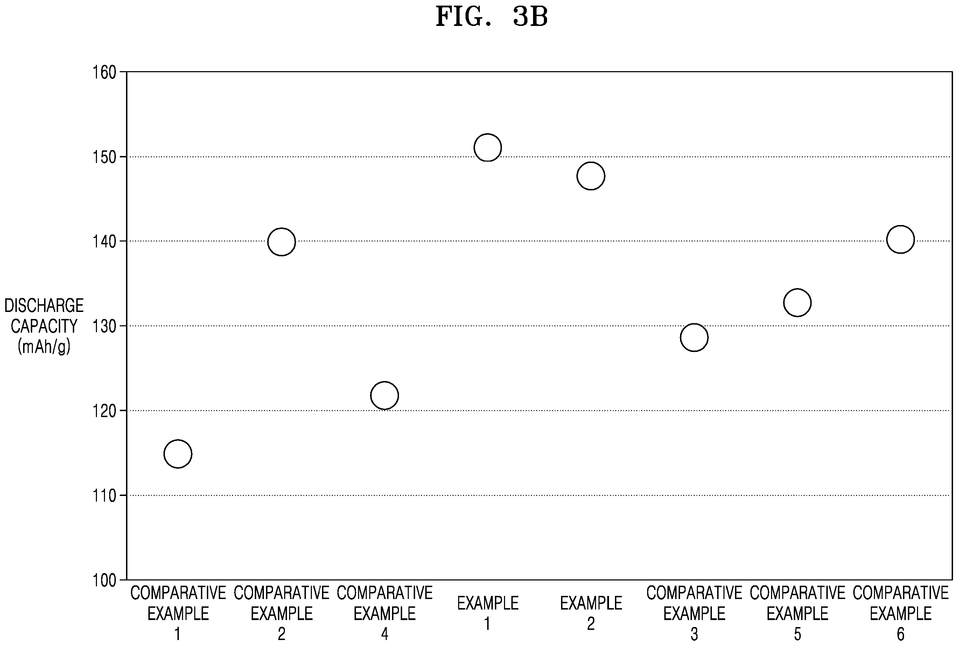

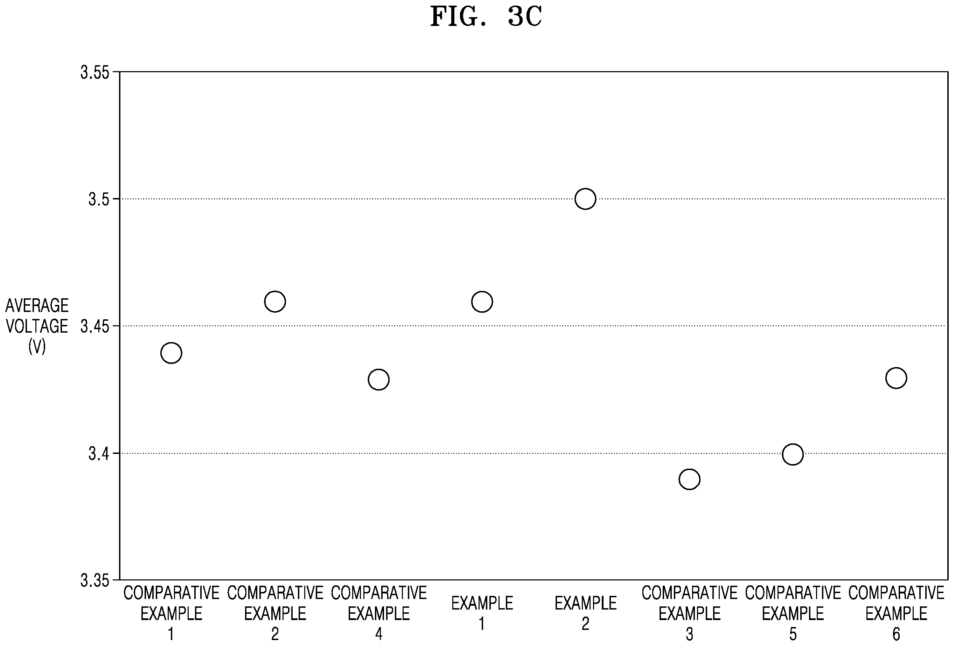

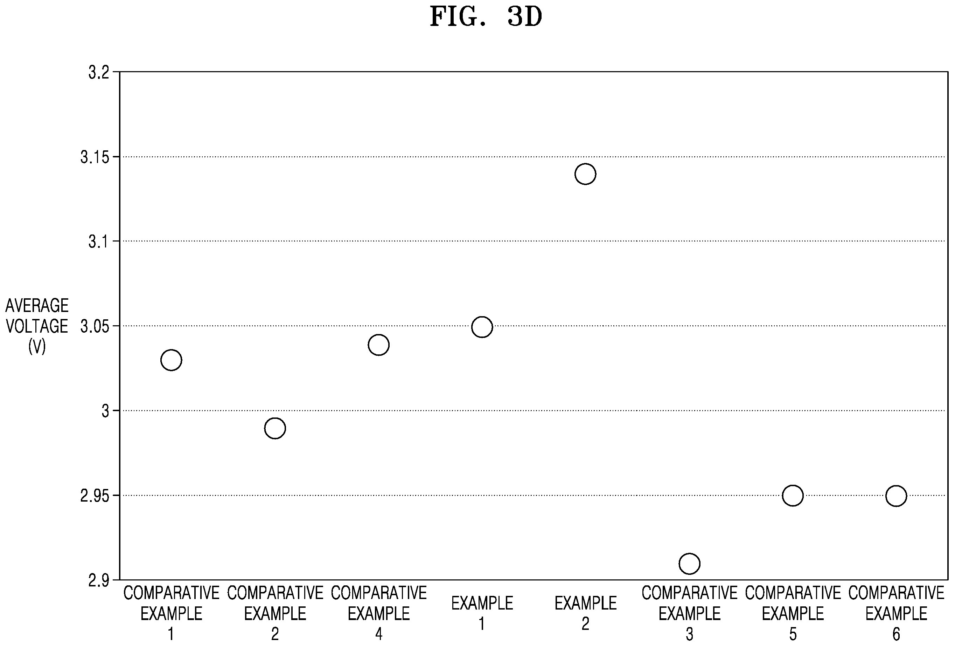

Discharge capacities at 1.0 C and 2.0 C were investigated and are shown in FIGS. 3A and 3B, respectively. In addition, average voltages at 1.0 C and 2.0 C were investigated and are shown in FIGS. 3C and 3D, respectively.

Referring to FIGS. 3A and 3B, the all-solid secondary batteries of Examples 1 and 2 show improved 1C discharge capacity and 2C discharge capacity in comparison with 1C discharge capacity and 2C discharge capacity of the all-solid secondary batteries of Comparative Examples 1 to 6.

In addition, referring to FIGS. 3C and 3D, the all-solid secondary batteries of Examples 1 and 2 show a higher average discharge voltage than the average discharge voltage of the all-solid secondary batteries of Comparative Examples 1 to 6, and are thus capable of showing high energy density at high rates. In addition, it was found that when discharged at 2 C, which is a faster rate than 1 C discharge, the all-solid secondary batteries of Examples 1 and 2 maintained excellent discharge capacity as well as very high average discharge voltage.

In addition, it was found that the all-solid secondary batteries of Examples 4 and 5 show an improved discharge capacity and average discharge voltage in comparison with Examples 1 and 2. In addition, the all-solid secondary batteries of Examples 3, 6 and 7 were found to show a discharge capacity and average discharge voltage comparable to Example 1.

Meanwhile, it could be confirmed that a lithium metal layer was formed between the anode current collector and the second anode active material layer after charging in the all-solid secondary batteries of Examples 1 and 2.

### Evaluation Example 3: Low-Temperature Charge-Discharge Characteristics

The all-solid batteries prepared according to Examples 1 and 2 and Comparative Examples 1 to 6 were each evaluated through charge-discharge processes under 2.5 V - 4.25 V, 0.1 C cut-off CCCV (Constant Current Constant Voltage) at 0 °C.

Charge-discharge characteristics of the all-solid secondary batteries were evaluated by the following charge-discharge test. The charge-discharge test was performed with the all-solid secondary battery placed in a constant-temperature bath at 0 °C.

In the 1st cycle, the battery was charged at a constant current of 0.1 C until the battery voltage reached 4.2 V. Subsequently, the battery was discharged with a constant current of 0.1 C until the battery voltage reached 2.5 V. In the 2nd cycle, the battery was charged at a constant current of 0.33 C until the battery voltage reached 4.25 V. Subsequently, the battery was discharged with a constant current of 0.33 C until the battery voltage reached 2.5 V.

In the 3rd cycle, the battery was charged at a constant current of 0.5 C until the battery voltage reached 4.2 V. Subsequently, the battery was discharged with a constant current of 0.5 C until the battery voltage reached 2.5 V.

In each cycle, a rest period of 10 minutes was provided after charging and discharging.

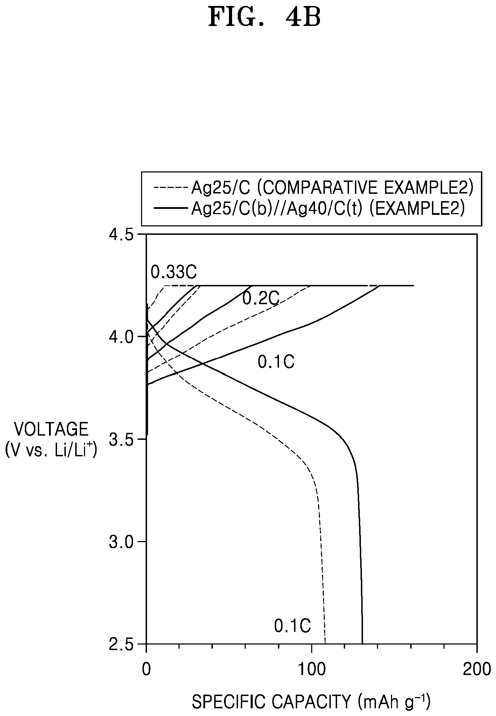

Discharge capacities at 0.5 C were investigated and are shown in FIG. 4B.

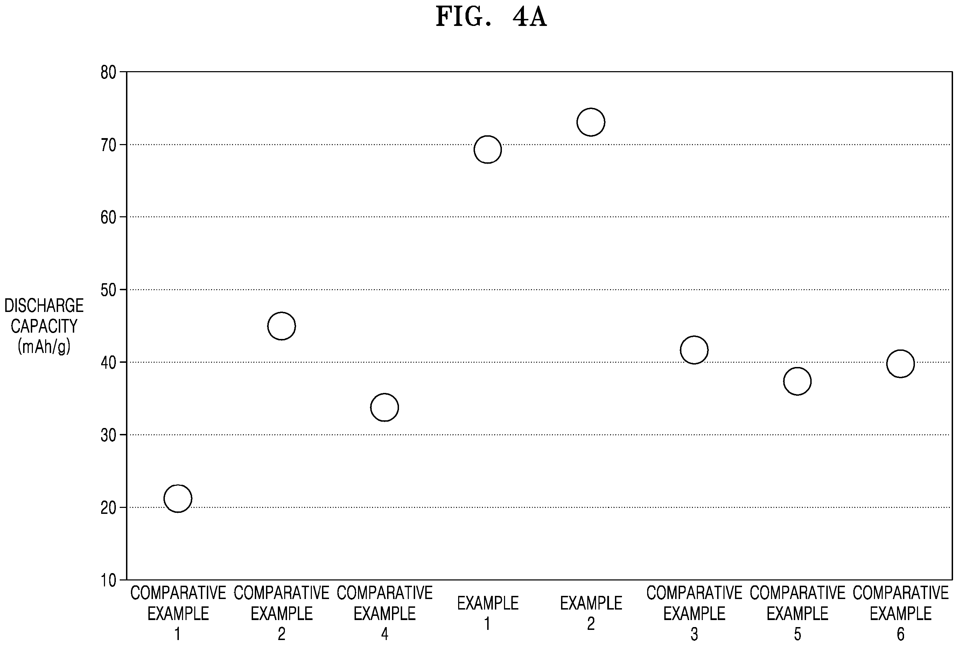

Referring to FIG. 4a, when conducting a low-temperature evaluation at 0°C, the all-solid-state secondary battery of Example 2 showed the highest discharge capacity. This result confirmed that the resistance generated in the process of lithium diffusion and creep at the solid electrolyte membrane interface can be reduced and that the high silver concentration of the first negative electrode active material layer is working effectively.

In addition, as a result of measuring the low-temperature charge/discharge characteristics of the all-solid-state secondary batteries of Examples 1 and 2, they showed improved discharge capacity characteristics compared to those of Comparative Examples 1 to 6.

Also, the all-solid secondary batteries of Examples 1, 2, and Comparative Example 2 were each evaluated through charge-discharge processes under 2.5 V - 4.25 V, 0.1 C cut-off CCCV (Constant Current Constant Voltage) at 0 °C.

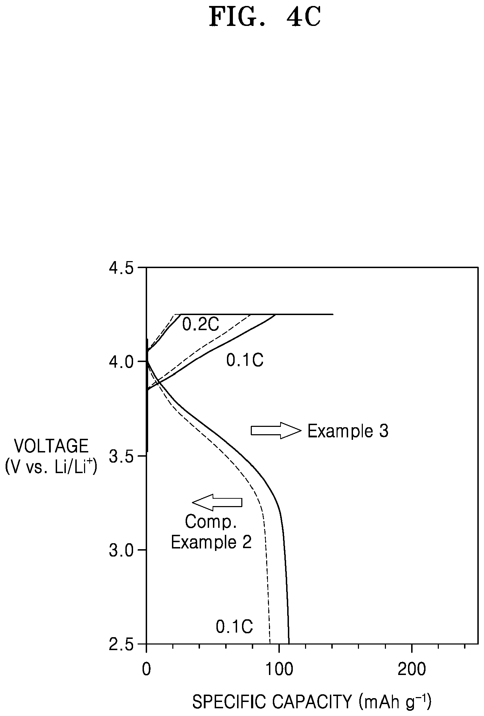

In the all-solid-state secondary batteries of Example 2 and Comparative Example 2, when the discharge rate was fixed at 0.1 C and the charge rate was increased to 0.1 C, 0.2 C, and 0.33 C, the results of evaluating the voltage characteristics were shown in Fig. 4b, and in the all-solid-state secondary batteries of Example 3 and Comparative Example 2, when the discharge rate was fixed at 0.1 C and the charge rate was increased to 0.1 C and 0.2 C, the results of investigating the change in the voltage characteristics were shown in Fig. 4c.

As shown in Fig. 4b, the all-solid secondary battery of Example 1 showed improved low-temperature charge/discharge characteristics when the discharge rate was fixed at 0.1C and the charge rate was increased to 0.1C, 0.2C, or 0.33C, compared to the all-solid secondary battery of Comparative Example 2, as the overvoltage decreased with increasing charge rate.

In addition, as shown in Fig. 4c, the all-solid secondary battery of Example 3 showed reduced overvoltage with increasing charge rate compared to the all-solid secondary battery of Comparative Example 2.

In addition, it was found that the all-solid secondary batteries of Examples 4 and 5 show improved low-temperature charge-discharge characteristics in comparison with Examples 1 and 2. In addition, it was found that the all-solid secondary batteries of Examples 3, 6 and 7 show low-temperature charge-discharge characteristics that are comparable to Example 1.

Through the description above, one or more embodiments are described; however, the present disclosure is not limited to the embodiments described herein, and modifications and variations within the scope of the claims and the detailed description and accompanied drawings of the present disclosure can be made, and it is to be understood that such modifications and variations are also within the scope of the present disclosure.

According to one aspect of the present disclosure, provided are an anode-solid electrolyte subassembly for an all-solid secondary battery, which has increased charge-discharge speed by having reduced lithium diffusion overpotential due to an increased metal concentration at the interface between a solid electrolyte and an anode active material layer, and an all-solid secondary battery, which is capable of improving high-rate and low-temperature operating performance by containing the anode-solid electrolyte subassembly.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made. The invention is defined by the following claims.

## Claims

1. An anode-solid electrolyte subassembly for an all-solid secondary battery, the anode-solid electrolyte subassembly comprising:
an anode current collector; an anode active material layer disposed on the anode current collector; and a solid electrolyte disposed on the anode active material layer and opposing the anode current collector,
wherein the anode active material layer comprises a first anode active material layer in contact with the solid electrolyte, and a second anode active material layer in contact with the anode current collector,
wherein the first anode active material layer comprises a first anode active material containing: a mixture of i) a first carbon anode active material and ii) one or more first elements selected from metals and metalloids; a composite of i) the first carbon anode active material and ii) the one or more first elements selected from metals and metalloids; or a combination thereof,
wherein the second anode active material layer comprises a second anode active material containing: a mixture of i) a second carbon anode active material and ii) one or more second elements selected from metals and metalloids; a composite of i) the second carbon anode active material and ii) the one or more second elements selected from metals and metalloids; or a combination thereof, and
wherein an amount of the first elements in the first anode active material layer is more than an amount of the second elements in the second anode active material layer, and the amount of the first elements is 25 wt% to 80 wt% with respect to a total weight of the first anode active material.

2. The anode-solid electrolyte subassembly of claim 1,
wherein the amount of the first elements in the first anode active material layer is 25 wt% to 40 wt% with respect to the total weight of the first anode active material; and/or
wherein the amount of the second elements in the second anode active material layer is 10 wt% to 25 wt% with respect to a total weight of the second anode active material; and/or
wherein a total amount of the first elements and the second elements in the anode active material layer is 1 wt% to 65 wt% with respect to a total weight of the first and second anode active materials in the anode active material layer.

3. The anode-solid electrolyte subassembly of claims 1 or 2,
wherein each of the first anode active material layer and the second anode active material layer has a thickness of 1 µm to 10 µm; and/or
wherein the first anode active material layer comprises a material having the first elements supported on the first carbon anode active material, and the second anode active material layer comprises a material having the second elements supported on the second carbon anode active material.

4. The anode-solid electrolyte subassembly of any of claims 1-3,
wherein a thickness of the second anode active material layer is equal to a thickness of the first anode active material layer, or wherein a thickness of the second anode active material layer is greater than a thickness of the first anode active material layer; and/or
wherein a ratio of a thickness of the second anode active material layer relative to a thickness of the first anode active material layer is 1 : 0.25 to 1 : 1.

5. The anode-solid electrolyte subassembly of any of claims 1-4,
wherein a difference between the amount of the first elements in the first anode active material layer and the amount of the second elements in the second anode active material layer is 10 wt% to 50 wt%.

6. The anode-solid electrolyte subassembly of any of claims 1-5,
wherein in the all-solid secondary battery in a discharged state after a formation process, a difference between an amount of one or more selected from metals and metalloids in a first region of the anode active material layer and an amount of one or more selected from metals and metalloids in a second region of the anode active material layer is 25 wt% or less, wherein the anode active material layer has a first surface adjacent the solid electrolyte layer and an opposite second surface adjacent the anode current collector, the first region has a thickness of 50 % to 80 % of a total thickness of the anode active material layer extending from the first surface of the anode active material layer towards the second surface of the anode active material layer, and the second region has a thickness of 20 % to 50 % of the total thickness of the anode active material layer, extending from the second surface of the anode active material layer towards the first surface of the anode active material layer;
preferably wherein the amount of the one or more selected from metals and metalloids in the second region is more than the amount of the one or more selected from metals and metalloids in the first region, and the difference therebetween is 1 wt% to 25 wt%.

7. The anode-solid electrolyte subassembly of any of claims 1-6,
wherein the first and second carbon anode active materials independently comprise an amorphous carbon, and
the one or more first elements and the one or more second elements independently comprise silver, indium, silicon, gallium, tin, aluminum, titanium, zirconium, niobium, germanium, antimony, gold, platinum, palladium, magnesium, zinc, nickel, iron, cobalt, chromium, cesium, sodium, potassium, calcium, yttrium, bismuth, tantalum, hafnium, barium, vanadium, strontium, lanthanum, or a combination thereof.

8. The anode-solid electrolyte subassembly of any of claims 1-7,
wherein the first anode active material layer comprises one first element selected from silicon, aluminum, tin, zinc, nickel, and silver; and the first carbon anode active material, wherein an amount of the first element with respect to a total weight of the first anode active material layer is 25 wt% to 40 wt%.

9. The anode-solid electrolyte subassembly of any of claims 1-8,
wherein the second anode active material layer comprises one second element selected from silicon, aluminum, tin, zinc, nickel, and silver; and the second carbon anode active material,
wherein an amount of the second element with respect to a total weight of the second anode active material layer is 10 wt% to 25 wt%.

10. The anode-solid electrolyte subassembly of any of claims 1-9,
wherein the first and second anode active materials each independently comprises a mixture of first particles and second particles, the first particles being composed of amorphous carbon and the second particles being composed of a metal and a metalloid, wherein an amount of the second particles with respect to a total weight of the mixture is 1 wt% to 60 wt%.

11. An all-solid secondary battery comprising:
a cathode; and the anode-solid electrolyte subassembly of any of claims 1-10, disposed on the cathode,
wherein the solid electrolyte of the anode-solid electrolyte subassembly is disposed between the cathode and the anode active material layer.

12. The all-solid secondary battery of claim 11,
further comprising a third anode active material layer disposed at least between the anode current collector and the anode active material layer, or between the anode current collector and the solid electrolyte,
wherein the third anode active material layer is a metal layer, wherein the metal layer comprises lithium or a lithium alloy.

13. The all-solid secondary battery of claims 11 or 12,
wherein the solid electrolyte of the anode-solid electrolyte subassembly comprises a solid electrolyte or a combination of a solid electrolyte and a gel electrolyte,
wherein the solid electrolyte comprises a sulfide solid electrolyte, an oxide solid electrolyte, a polymer solid electrolyte, or a combination thereof, and the gel electrolyte comprises a polymer gel electrolyte.

14. The all-solid secondary battery of any of claims 11-13,
wherein the cathode includes a cathode current collector,
wherein at least one of the cathode current collector and the anode current collector comprises a base film and a metal layer disposed on one side or both sides of the base film,
wherein the base film comprises a polymer, the polymer comprising polyethylene terephthalate, polyethylene, polypropylene, polybutylene terephthalate, polyimide, or a combination thereof, and
wherein the metal layer comprises indium, copper, magnesium, stainless steel, titanium, iron, cobalt, nickel, zinc, aluminum, germanium, lithium, or an alloy thereof.

15. The all-solid secondary battery of any of claims 11-14,
wherein the solid electrolyte of the anode-solid electrolyte subassembly comprises a sulfide solid electrolyte,
wherein the sulfide solid electrolyte is one or more selected from: Li₂S-P₂S₅ and Li₂S-P₂S₅-LiX, wherein X is a halogen element; Li₂S-P₂S₅-Li₂O, Li₂S-P₂S₅-Li₂O-Lil, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, and Li₂S-P₂S₅-ZₘSₙ, wherein m and n each are a positive number, and Z is Ge, Zn or Ga; Li₂S-GeS₂, Li₂S-SiS₂-Li₃PO₄, and Li₂S-SiS₂-LiₚMO_{q}, wherein p and q each are a positive number and M is P, Si, Ge, B, Al, Ga or In; Li₇₋ₓPS₆₋ₓClₓ, wherein 0≤x≤2; Li₇₋ₓPS₆₋ₓBrₓ, wherein 0≤x≤2; and Li₇₋ₓPS₆₋ₓIₓ, wherein 0≤x≤2.

## Patentansprüche

1. Anoden-Festelektrolyt-Unterbaugruppe für eine Festkörpersekundärbatterie, wobei die Anoden-Festelektrolyt-Unterbaugruppe Folgendes umfasst:
einen Anodenstromkollektor; eine Anodenaktivmaterialschicht, die auf dem Anodenstromkollektor angeordnet ist; und einen Festelektrolyten, der auf der Anodenaktivmaterialschicht angeordnet ist und dem Anodenstromkollektor gegenüberliegt;
wobei die Anodenaktivmaterialschicht eine erste Anodenaktivmaterialschicht in Kontakt mit dem Festelektrolyten und eine zweite Anodenaktivmaterialschicht in Kontakt mit dem Anodenstromkollektor umfasst;
wobei die erste Anodenaktivmaterialschicht ein erstes Anodenaktivmaterial umfasst, das Folgendes enthält: eine Mischung aus i) einem ersten Kohlenstoffanodenaktivmaterial und ii) einem oder mehreren ersten Elementen ausgewählt aus Metallen und Halbmetallen; einen Verbundwerkstoff aus i) dem ersten Kohlenstoffanodenaktivmaterial und ii) dem einen oder den mehreren ersten Elementen ausgewählt aus Metallen und Halbmetallen; oder eine Kombination davon,
wobei die zweite Anodenaktivmaterialschicht ein zweites Anodenaktivmaterial umfasst, das Folgendes enthält: eine Mischung aus i) einem zweiten Kohlenstoffanodenaktivmaterial und ii) einem oder mehreren zweiten Elementen ausgewählt aus Metallen und Halbmetallen; einen Verbundwerkstoff aus i) dem zweiten Kohlenstoffanodenaktivmaterial und ii) dem einen oder den mehreren zweiten Elementen ausgewählt aus Metallen und Halbmetallen; oder eine Kombination davon, und
wobei eine Menge der ersten Elemente in der ersten Anodenaktivmaterialschicht mehr als eine Menge der zweiten Elemente in der zweiten Anodenaktivmaterialschicht ist und die Menge der ersten Elemente 25 Gew.-% bis 80 Gew.-% in Bezug auf ein Gesamtgewicht des ersten Anodenaktivmaterials beträgt.

2. Anoden-Festelektrolyt-Unterbaugruppe nach Anspruch 1,
wobei die Menge der ersten Elemente in der ersten Anodenaktivmaterialschicht 25 Gew.-% bis 40 Gew.-% in Bezug auf das Gesamtgewicht des ersten Anodenaktivmaterials beträgt; und/oder
wobei die Menge der zweiten Elemente in der zweiten Anodenaktivmaterialschicht 10 Gew.-% bis 25 Gew.-% in Bezug auf ein Gesamtgewicht des zweiten Anodenaktivmaterials beträgt; und/oder
wobei eine Gesamtmenge der ersten Elemente und der zweiten Elemente in der Anodenaktivmaterialschicht 1 Gew.-% bis 65 Gew.-% in Bezug auf ein Gesamtgewicht des ersten und zweiten Anodenaktivmaterials in der Anodenaktivmaterialschicht beträgt.

3. Anoden-Festelektrolyt-Unterbaugruppe nach Anspruch 1 oder 2, wobei jede von der ersten Anodenaktivmaterialschicht und der zweiten Anodenaktivmaterialschicht eine Dicke von 1 µm bis 10 µm aufweist; und/oder
wobei die erste Anodenaktivmaterialschicht ein Material umfasst, bei dem die ersten Elemente auf dem ersten Kohlenstoffanodenaktivmaterial getragen werden, und die zweite Anodenaktivmaterialschicht ein Material umfasst, bei dem die zweiten Elemente auf dem zweiten Kohlenstoffanodenaktivmaterial getragen werden.

4. Anoden-Feststoffelektrolyt-Unterbaugruppe nach einem der Ansprüche 1 bis 3, wobei eine Dicke der zweiten Anodenaktivmaterialschicht gleich einer Dicke der ersten Anodenaktivmaterialschicht ist oder wobei eine Dicke der zweiten Anodenaktivmaterialschicht größer als eine Dicke der ersten Anodenaktivmaterialschicht ist; und/oder
wobei ein Verhältnis einer Dicke der zweiten Anodenaktivmaterialschicht relativ zu einer Dicke der ersten Anodenaktivmaterialschicht 1:0,25 bis 1:1 ist.

5. Anoden-Festelektrolyt-Unterbaugruppe nach einem der Ansprüche 1 bis 4,
wobei eine Differenz zwischen der Menge der ersten Elemente in der ersten Anodenaktivmaterialschicht und der Menge der zweiten Elemente in der zweiten Anodenaktivmaterialschicht 10 Gew.-% bis 50 Gew.-% beträgt.

6. Anoden-Feststoffelektrolyt-Unterbaugruppe nach einem der Ansprüche 1 bis 5, wobei in der Festkörpersekundärbatterie in einem entladenen Zustand nach einem Ausbildungsprozess eine Differenz zwischen einer Menge von einem oder mehreren, die aus Metallen und Halbmetallen ausgewählt sind, in einem ersten Bereich der Anodenaktivmaterialschicht und einer Menge von einem oder mehreren ausgewählt aus Metallen und Halbmetallen, in einem zweiten Bereich der Anodenaktivmaterialschicht 25 Gew.-% oder weniger beträgt, wobei die Anodenaktivmaterialschicht eine erste Oberfläche benachbart zu der Festelektrolytschicht und eine gegenüberliegende zweite Oberfläche benachbart zu dem Anodenstromkollektor aufweist, wobei der erste Bereich eine Dicke von 50 % bis 80 % einer Gesamtdicke der Anodenaktivmaterialschicht aufweist, die sich von der ersten Oberfläche
der Anodenaktivmaterialschicht in Richtung der zweiten Oberfläche der Anodenaktivmaterialschicht erstreckt, und der zweite Bereich eine Dicke von 20 % bis 50 % der Gesamtdicke der Anodenaktivmaterialschicht aufweist, die sich von der zweiten Oberfläche der Anodenaktivmaterialschicht in Richtung der ersten Oberfläche der Anodenaktivmaterialschicht erstreckt;
vorzugsweise wobei die Menge des einen oder der mehreren ausgewählt aus Metallen und Halbmetallen, in dem zweiten Bereich größer als die Menge des einen oder der mehreren ausgewählt aus Metallen und Halbmetallen, in dem ersten Bereich ist und die Differenz dazwischen 1 Gew.-% bis 25 Gew.-% beträgt.

7. Anoden-Festelektrolyt-Unterbaugruppe nach einem der Ansprüche 1 bis 6,
wobei das erste und zweite Kohlenstoffanodenaktivmaterial unabhängig einen amorphen Kohlenstoff umfassen, und
das eine oder die mehreren ersten Elemente und das eine oder die mehreren zweiten Elemente unabhängig Silber, Indium, Silizium, Gallium, Zinn, Aluminium, Titan, Zirkonium, Niob, Germanium, Antimon, Gold, Platin, Palladium, Magnesium, Zink, Nickel, Eisen, Kobalt, Chrom, Cäsium, Natrium, Kalium, Calcium, Yttrium, Wismut, Tantal, Hafnium, Barium, Vanadium, Strontium, Lanthan oder eine Kombination davon umfassen.

8. Anoden-Festelektrolyt-Unterbaugruppe nach einem der Ansprüche 1 bis 7,
wobei die erste Anodenaktivmaterialschicht ein erstes Element ausgewählt aus Silizium, Aluminium, Zinn, Zink, Nickel und Silber; und das erste Kohlenstoffanodenaktivmaterial umfasst, wobei eine Menge des ersten Elements in Bezug auf ein Gesamtgewicht der ersten Anodenaktivmaterialschicht 25 Gew.-% bis 40 Gew.-% beträgt.

9. Anoden-Festelektrolyt-Unterbaugruppe nach einem der Ansprüche 1 bis 8,
wobei die zweite Anodenaktivmaterialschicht ein zweites Element ausgewählt aus Silizium, Aluminium, Zinn, Zink, Nickel und Silber; und das zweite Kohlenstoffanodenaktivmaterial umfasst,
wobei eine Menge des zweiten Elements in Bezug auf ein Gesamtgewicht der zweiten Anodenaktivmaterialschicht 10 Gew.-% bis 25 Gew.-% beträgt.

10. Anoden-Festelektrolyt-Unterbaugruppe nach einem der Ansprüche 1 bis 9,
wobei das erste und zweite Anodenaktivmaterial jeweils unabhängig eine Mischung aus ersten Partikeln und zweiten Partikeln umfassen, wobei die ersten Partikel aus amorphem Kohlenstoff bestehen und die zweiten Partikel aus einem Metall und einem Halbmetall bestehen, wobei eine Menge der zweiten Partikel in Bezug auf ein Gesamtgewicht der Mischung 1 Gew.-% bis 60 Gew.-% beträgt.

11. Festkörpersekundärbatterie, umfassend:
eine Kathode; und die Anoden-Festelektrolyt-Unterbaugruppe nach einem der Ansprüche 1 bis 10, die auf der Kathode angeordnet ist,
wobei der Festelektrolyt der Anoden-Festelektrolyt-Unterbaugruppe zwischen der Kathode und der Anodenaktivmaterialschicht angeordnet ist.

12. Festkörpersekundärbatterie nach Anspruch 11,
ferner umfassend eine dritte Anodenaktivmaterialschicht, die zumindest zwischen dem Anodenstromkollektor und der Anodenaktivmaterialschicht oder zwischen dem Anodenstromkollektor und dem Festelektrolyten angeordnet ist,
wobei die dritte Anodenaktivmaterialschicht eine Metallschicht ist, wobei die Metallschicht Lithium oder eine Lithiumlegierung umfasst.

13. Festkörpersekundärbatterie nach Anspruch 11 oder 12,
wobei der Festelektrolyt der Anoden-Festelektrolyt-Unterbaugruppe einen Festelektrolyten oder eine Kombination aus einem Festelektrolyten und einem Gelelektrolyten umfasst, wobei der Festelektrolyt einen Sulfid-Festelektrolyten, einen Oxid-Festelektrolyten, einen Polymer-Festelektrolyten oder eine Kombination davon umfasst und der Gelelektrolyt einen Polymer-Gelelektrolyten umfasst.

14. Festkörpersekundärbatterie nach einem der Ansprüche 11 bis 13, wobei die Kathode einen Kathodenstromkollektor beinhaltet, wobei zumindest eines von dem Kathodenstromkollektor und dem Anodenstromkollektor eine Basisfolie und eine Metallschicht umfasst, die auf einer Seite oder beiden Seiten der Basisfolie angeordnet ist,
wobei die Basisfolie ein Polymer umfasst, wobei das Polymer Polyethylenterephthalat, Polyethylen, Polypropylen, Polybutylenterephthalat, Polyimid oder eine Kombination davon umfasst, und
wobei die Metallschicht Indium, Kupfer, Magnesium, Edelstahl, Titan, Eisen, Kobalt, Nickel, Zink, Aluminium, Germanium, Lithium oder eine Legierung davon umfasst.

15. Festkörpersekundärbatterie nach einem der Ansprüche 11 bis 14,
wobei der Festelektrolyt der Anoden-Festelektrolyt-Unterbaugruppe einen Sulfid-Festelektrolyten umfasst,
wobei der Sulfid-Festelektrolyt einer oder mehrere ist, die ausgewählt sind aus: Li₂S-P₂S₅ und Li₂S-P₂S₅-LiX, wobei X ein Halogenelement ist; Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃ und Li₂S-P₂S₅-ZmSn, wobei m und n jeweils eine positive Zahl sind, und Z Ge, Zn oder Ga ist; Li₂S-GeS₂, Li₂S-SiS₂-Li₃PO₄ und Li₂S-SiS₂-LiₚMO_{q}, wobei p und q jeweils eine positive Zahl sind und M P, Si, Ge, B, Al, Ga oder In ist; Li₇₋ₓPS₆₋ₓClₓ, wobei 0≤x≤2; Li₇₋ₓPS₆₋ₓBrₓ, wobei 0≤x≤2; und Li₇₋ₓPS₆₋ₓIₓ, wobei 0≤x≤2.

## Revendications

1. Sous-ensemble anode-électrolyte solide pour une batterie secondaire tout solide, le sous-ensemble anode-électrolyte solide comprenant :
un collecteur de courant d'anode ; une couche de matériau actif d'anode disposée sur le collecteur de courant d'anode ; et un électrolyte solide disposé sur la couche de matériau actif d'anode et opposé au collecteur de courant d'anode,
ladite couche de matériau actif d'anode comprenant une première couche de matériau actif d'anode en contact avec l'électrolyte solide, et une deuxième couche de matériau actif d'anode en contact avec le collecteur de courant d'anode,
ladite première couche de matériau actif d'anode comprenant un premier matériau actif d'anode contenant : un mélange de i) un premier matériau actif d'anode en carbone et ii) un ou plusieurs premiers éléments choisis parmi les métaux et les métalloïdes ; un composite de i) le premier matériau actif d'anode en carbone et ii) le ou les premiers éléments choisis parmi les métaux et les métalloïdes ; ou une combinaison de ceux-ci,
ladite deuxième couche de matériau actif d'anode comprenant un deuxième matériau actif d'anode contenant : un mélange de i) un second matériau actif d'anode en carbone et ii) un ou plusieurs seconds éléments choisis parmi des métaux et des métalloïdes ; un composite de i) le second matériau actif d'anode en carbone et ii) le ou les seconds éléments choisis parmi des métaux et des métalloïdes ; ou une combinaison de ceux-ci, et
une quantité des premiers éléments dans la première couche de matériau actif d'anode étant supérieure à une quantité des seconds éléments dans la seconde couche de matériau actif d'anode, et ladite quantité des premiers éléments étant de 25 % en poids à 80 % en poids par rapport à un poids total du premier matériau actif d'anode.

2. Sous-ensemble anode-électrolyte solide de la revendication 1,
ladite quantité des premiers éléments dans la première couche de matériau actif d'anode étant de 25 % en poids à 40 % en poids par rapport au poids total du premier matériau actif d'anode ; et/ou
ladite quantité des seconds éléments dans la deuxième couche de matériau actif d'anode étant de 10 % en poids à 25 % en poids par rapport à un poids total du second matériau actif d'anode ; et/ou
une quantité totale des premiers éléments et des seconds éléments dans la couche de matériau actif d'anode étant de 1 % en poids à 65 % en poids par rapport à un poids total des premier et second matériaux actifs d'anode dans la couche de matériau actif d'anode.

3. Sous-ensemble anode-électrolyte solide des revendications 1 ou 2, chacune de la première couche de matériau actif d'anode et de la deuxième couche de matériau actif d'anode possédant une épaisseur de 1 µm à 10 µm ; et/ou
ladite première couche de matériau actif d'anode comprenant un matériau possédant les premiers éléments supportés sur le premier matériau actif d'anode en carbone, et ladite deuxième couche de matériau actif d'anode comprenant un matériau possédant les seconds éléments supportés sur le second matériau actif d'anode en carbone.

4. Sous-ensemble anode-électrolyte solide de l'une quelconque des revendications 1-3, une épaisseur de la deuxième couche de matériau actif d'anode étant égale à une épaisseur de la première couche de matériau actif d'anode, ou une épaisseur de la deuxième couche de matériau actif d'anode étant supérieure à une épaisseur de la première couche de matériau actif d'anode ; et/ou
un rapport d'une épaisseur de la deuxième couche de matériau actif d'anode par rapport à une épaisseur de la première couche de matériau actif d'anode étant de 1:0,25 à 1:1 .

5. Sous-ensemble anode-électrolyte solide de l'une quelconque des revendications 1-4,
une différence entre la quantité des premiers éléments dans la première couche de matériau actif d'anode et la quantité des seconds éléments dans la deuxième couche de matériau actif d'anode étant de 10 % en poids à 50 % en poids.

6. Sous-ensemble anode-électrolyte solide de l'une quelconque des revendications 1-5, dans la batterie secondaire tout solide dans l'état déchargé après un processus de formation, une différence entre une quantité d'un ou de plusieurs choisis parmi des métaux et des métalloïdes dans une première zone de la couche de matériau actif d'anode et une quantité d'un ou de plusieurs choisis parmi des métaux et des métalloïdes dans une seconde zone de la couche de matériau actif d'anode étant inférieure ou égale à 25 % en poids, ladite couche de matériau actif d'anode possédant une première surface adjacente à la couche d'électrolyte solide et une seconde surface opposée adjacente au collecteur de courant d'anode, ladite première zone possédant une épaisseur de 50 % à 80 % d'une épaisseur totale de la couche de matériau actif d'anode s'étendant à partir de la première surface de la couche de matériau actif d'anode vers la seconde surface de la couche de matériau actif d'anode, et ladite seconde zone possédant une épaisseur de 20 % à 50 % de l'épaisseur totale de la couche de matériau actif d'anode, s'étendant à partir de la seconde surface de la couche de matériau actif d'anode vers la première surface de la couche de matériau actif d'anode ;
de préférence, ladite quantité du ou des métaux et métalloïdes choisis parmi les métaux et les métalloïdes dans la seconde zone étant supérieure à la quantité du ou des métaux et métalloïdes choisis parmi les métaux et les métalloïdes dans la première zone, et la différence entre ceux-ci étant de 1 % en poids à 25 % en poids.

7. Sous-ensemble anode-électrolyte solide de l'une quelconque des revendications 1-6,
lesdites premier et second matériaux actifs d'anode en carbone comprenant indépendamment un carbone amorphe, et
ledit ou lesdits premiers éléments et ledit ou lesdits seconds éléments comprenant indépendamment l'argent, l'indium, le silicium, le gallium, l'étain, l'aluminium, le titane, le zirconium, le niobium, le germanium, l'antimoine, l'or, le platine, le palladium, le magnésium, le zinc, le nickel, le fer, le cobalt, le chrome, le césium, le sodium, le potassium, le calcium, l'yttrium, le bismuth, le tantale, l'hafnium, le baryum, le vanadium, le strontium, le lanthane, ou une combinaison de ceux-ci.

8. Sous-ensemble anode-électrolyte solide de l'une quelconque des revendications 1-7,
ladite première couche de matériau actif d'anode comprenant un premier élément choisi parmi le silicium, l'aluminium, l'étain, le zinc, le nickel et l'argent ; et le premier matériau actif d'anode en carbone, une quantité du premier élément par rapport à un poids total de la première couche de matériau actif d'anode étant de 25 % en poids à 40 % en poids.

9. Sous-ensemble anode-électrolyte solide de l'une quelconque des revendications 1-8,
ladite deuxième couche de matériau actif d'anode comprenant un second élément choisi parmi le silicium, l'aluminium, l'étain, le zinc, le nickel et l'argent ; et le second matériau actif d'anode en carbone,
une quantité du second élément par rapport à un poids total de la deuxième couche de matériau actif d'anode étant de 10 % en poids à 25 % en poids.

10. Sous-ensemble anode-électrolyte solide de l'une quelconque des revendications 1 à 9,
lesdits premier et second matériaux actifs d'anode comprenant chacun indépendamment un mélange de premières particules et de secondes particules, les premières particules étant composées de carbone amorphe et les secondes particules étant composées d'un métal et d'un métalloïde, une quantité des secondes particules par rapport à un poids total du mélange étant de 1 % en poids à 60 % en poids.

11. Batterie secondaire tout solide comprenant :
une cathode ; et le sous-ensemble anode-électrolyte solide de l'une quelconque des revendications 1-10, disposé sur la cathode,
ledit électrolyte solide du sous-ensemble anode-électrolyte solide étant disposé entre la cathode et la couche de matériau actif d'anode.

12. Batterie secondaire tout solide de la revendication 11,
comprenant en outre une troisième couche de matériau actif d'anode disposée au moins entre le collecteur de courant d'anode et la couche de matériau actif d'anode, ou entre le collecteur de courant d'anode et l'électrolyte solide,
ladite troisième couche de matériau actif d'anode étant une couche de métal, ladite couche de métal comprenant du lithium ou un alliage de lithium.

13. Batterie secondaire tout solide des revendications 11 ou 12,
ledit électrolyte solide du sous-ensemble anode-électrolyte solide comprenant un électrolyte solide ou une combinaison d'un électrolyte solide et d'un électrolyte en gel, ledit électrolyte solide comprenant un électrolyte solide de sulfure, un électrolyte solide d'oxyde, un électrolyte solide polymère, ou une combinaison de ceux-ci, et ledit électrolyte en gel comprenant un électrolyte en gel polymère.

14. Batterie secondaire tout solide de l'une quelconque des revendications 11-13, ladite cathode comprenant un collecteur de courant de cathode, au moins l'un du collecteur de courant de cathode et du collecteur de courant d'anode comprenant un film de base et une couche métallique disposée sur un côté ou sur les deux côtés du film de base,
ledit film de base comprenant un polymère, le polymère comprenant du poly(téréphtalate d'éthylène), du polyéthylène, du polypropylène, du poly(téréphtalate de butylène), du polyimide ou une combinaison de ceux-ci, et
ladite couche de métal comprenant de l'indium, du cuivre, du magnésium, de l'acier inoxydable, du titane, du fer, du cobalt, du nickel, du zinc, de l'aluminium, du germanium, du lithium, ou un alliage de ceux-ci.

15. Batterie secondaire tout solide de l'une quelconque des revendications 11-14,
ledit électrolyte solide du sous-ensemble anode-électrolyte solide comprenant un électrolyte solide de sulfure,
ledit électrolyte solide de sulfure étant l'un ou plusieurs choisis parmi : Li₂S-P₂S₅ et Li₂S-P₂S₅-LiX, dans lequel X est un élément halogène ; Li₂S-P₂S₅-Li₂O, Li₂S-P₂S₅-Li₂O-LiI, Li₂S-SiS₂, Li₂S-SiS₂-LiI, Li_{2S}-SiS₂-LiBr, Li₂S-SiS₂-LiCl, Li₂S-SiS₂-B₂S₃-LiI, Li₂S-SiS₂-P₂S₅-LiI, Li₂S-B₂S₃, et Li₂S-P₂S₅-ZₘSₙ, dans lequel m et n sont chacun un nombre positif, et Z est Ge, Zn ou Ga ; Li₂S-GeS₂, Li₂S-SiS₂-Li₃PO₄, et Li₂S-SiS₂-LiₚMO_{q}, dans lequel p et q sont chacun un nombre positif et M est P, Si, Ge, B, Al, Ga ou In ; Li₇₋ₓPS₆₋ₓClₓ, dans lequel 0 ≤ x ≤ 2 ; Li₇₋ₓPS₆₋ₓBrₓ, dans lequel 0 ≤ x ≤ 2 ; et Li₇₋ₓPS₆₋ₓIₓ, dans lequel 0 ≤ x ≤ 2.
